# EUROPÄISCHE PATENTSCHRIFT

(11) **EP 2 379 603 B1**
(45) Veröffentlichungstag und Bekanntmachung des Hinweises auf die Patenterteilung: **01.05.2013**
(21) Anmeldenummer: 09798924.8
(22) Anmeldetag: 21.12.2009
(51) Int. Cl.: C08F 2/22, C08F 220/18, C08K 3/38, C09D 133/00, C09J 133/00

(54) **BINDEMITTELZUSAMMENSETZUNGEN, DIE BORSÄURE ODER BORSÄURESALZ ENTHALTEN**
BINDER COMPOSITIONS COMPRISING BORIC ACID OR BORIC ACID SALT
COMPOSITIONS DE LIANT CONTENANT DE L'ACIDE BORIQUE OU UN SEL D'ACIDE BORIQUE

(30) Priorität: 22.12.2008 EP 08172579
(43) Veröffentlichungstag der Anmeldung: 26.10.2011
(73) Patentinhaber: BASF SE, 67056 Ludwigshafen (DE)
(72) Erfinder: TERRENOIRE, Alexandre, 68163 Mannheim (DE); REINHOLD, Frank, 68199 Mannheim (DE); AMTHOR, Stephan, 67063 Ludwigshafen (DE); GROß, Michael, 68161 Mannheim (DE); ROSCHMANN, Konrad, 68526 Ladenburg (DE); BECKER, Stefan, 68167 Mannheim (DE); VYAKARANAM, Kamesh, Freeport Texas 77541 (US); HARTIG, Jens, 67063 Ludwigshafen (DE)
(86) Internationale Anmeldenummer: PCT/EP2009/067608
(87) Internationale Veröffentlichungsnummer: WO 2010/072697

(56) Entgegenhaltungen:
- EP-A2- 1 486 516
- EP-A2- 1 964 887
- WO-A1-2006/118745

## Beschreibung

Die vorliegende Erfindung betrifft auf Polymerdispersionen basierende Bindemittelzusammensetzungen, die Borsäure oder Salze der Borsäure als Vernetzungsmittel enthalten, Verfahren zu ihrer Herstellung und ihre Verwendungen.

Wässrige Polymerdispersionen, die beim Verdampfen des wässrigen Dispergiermediums Polymerfilme bilden, haben weite Verbreitung gefunden. Sie dienen beispielsweise als wässrige Bindemittelsysteme in Anstrichfarben, in Lacken, in Papierstreichmassen, in Beschichtungssystemen für Leder, in Beschichtungssystemen für mineralische Formkörper wie Faserzementplatten und Betondachsteine, in Korrosionsschutzgrundierungen (Primer) für Metalle, als Bindemittel bei der Vliesstoffherstellung, als Klebrohstoffe, als Additive für hydraulisch bindende Massen wie Gips oder Beton, als Additive für Ton- oder Lehmbaustoffe, zur Herstellung von Membranen und dergleichen. Die durch Trocknung aus solchen wässrigen Dispersionen erhältlichen festen, teilchen-oder pulverförmigen Polymerzusammensetzungen können ebenfalls eingesetzt werden und dienen darüber hinaus als Additive für eine große Vielzahl von Anwendungsbereichen wie z. B. zur Modifizierung von Kunststoffen, als Zementadditive, als Komponenten für Tonerformulierungen, als Zusatzstoffe in elektrophotographischen Anwendungen und dergleichen. Die Herstellung derartiger wässriger Polymerdispersionen erfolgt typischerweise durch eine radikalische, wässrige Emulsionspolymerisation ethylensich ungesättigter Monomere.

Es hat sich gezeigt, dass Polymerdispersionen mit vernetzten Polymerketten für viele solcher Anwendungen vorteilhafte Eigenschaften besitzen. Die Vernetzung der Polymerketten kann sowohl während als auch nach der Emulsionspolymerisation erfolgen. Ersteres wird als interne und letzteres als externe Vernetzung bezeichnet. Beispiele für interne Vernetzung sind radikalische Polymerisationen einfach ungesättigter Monomere in Gegenwart mehrfach ungesättigter Monomere, die als Vernetzungsmittel fungieren.

EP 1 134 240 beschreibt beispielsweise geruchsarme, lösungsmittelfrei verarbeitbare Bindemittelpolymerisate, die durch Emulsionspolymerisation ethylenisch ungesättigter Monomere, von denen wenigstens eines ein vernetzend wirkendes Monomer mit wenigstens zwei nichtkonjugierten Vinylgruppen ist, erhalten wird.

Für die externe Vernetzung werden in der Regel Polymere mit bestimmten funktionellen oder reaktiven Gruppen verwendet, die sich durch entsprechend modifizierte Monomere einführen lassen. Je nach Art der funktionellen oder reaktiven Gruppen wird im Anschluss an die Polymerisation die Vernetzung durch Bestrahlung oder durch Zugabe insbesondere von reaktiven oder ionischen Additiven bewirkt. Als ionische Vernetzungsmittel finden insbesondere Zink- und Calciumsalze Verwendung.

Die EP1 419 897 beschreibt Aufzeichnungsmaterialien für Tintenstrahldrucker mit einer die Tinte aufnehmenden Schicht, die ein wasserlösliches oder wasserdispergierbares Polymer umfasst. Das Polymer beinhaltet eine sich wiederholende Monomereinheit, die dazu in der Lage ist, Borsäure mittels einer stickstoffhaltigen funktionellen Gruppe und einer Hydroxylgruppe durch Ausbildung eines 5- oder 6-gliedrigen Rings zu chelatisieren. Die beschriebenen Polymerdispersionen besitzen nur sehr eingeschränkte Anwendungsmöglichkeiten und sind insbesondere als Komponenten für Anstrichfarben und Kleber nicht geeignet.

US 4,544,699 beschreibt eine Klebstoffzusammensetzung enthaltend eine wässrige Dispersion eines Copolymers, das aus Vinylidenchlorid und einem Monomer mit einer Hydroxylgruppe hergestellt ist, sowie einem Vernetzungsmittel bei dem es sich um Borsäure oder Salze der Borsäure handeln kann. Die Zusammensetzungen sind aufgrund des hohen Anteils an Vinylidenchlorid und der Beschränkung auf durch Hydroxylgruppen vermittelte Vernetzung nur für sehr spezielle Klebstoffanwendungen geeignet.

Der vorliegenden Erfindung liegt die Aufgabe zu Grunde, auf wässrigen Polymerdispersionen basierende Bindemittel mit verbesserten anwendungstechnischen Eigenschaften zur Verfügung zu stellen. Diese sollen insbesondere mit antikorrosiven Anstrichmitteln erzeugten Beschichtungsfilmen eine verbesserte korrosionshemmende Wirkung verleihen, sowie optimierte Adhäsions- und Kohäsionseigenschaften von Klebstoffen ermöglichen.

Überraschenderweise wurde gefunden, dass diese Aufgabe durch den Einsatz von Bindemittelzusammensetzungen, die Polymere mit COOH- oder CONH₂-Gruppen sowie Borsäure oder ein Borsäuresalz enthalten, gelöst wird.

Ein erster Gegenstand der Erfindung ist daher eine wässrige Bindemittelzusammensetzung, enthaltend
a) ein wasserunlösliches Polymer (P) in Form dispergierter Polymerpartikel mit einer Glasübergangstemperatur im Bereich von -50°C bis 50°C erhältlich durch radikalische Polymerisation ethylenisch ungesättigter Monomere M, wobei die Monomere M umfassen:
   - 80 bis 99,9 Gew.-%, bezogen auf die Gesamtmenge an Monomeren M, wenigstens eines gering wasserlöslichen neutralen monoethylenisch ungesättigten Monomers M1; und
   - 0,1 bis 20 Gew.-%, bezogen auf die Gesamtmenge an Monomeren M, wenigstens eines monoethylenisch ungesättigten Monomers M2, das wenigstens eine Carboxylgruppe und/oder wenigstens eine Carbonsäureamidgruppe (CONH₂) trägt;
   und
b) Borsäure und/oder wenigstens ein Salz der Borsäure.

Ein weiterer Gegenstand der Erfindung ist eine feste Bindemittelzusammensetzung, die ein wasserunlösliches Polymer (P), wie zuvor definiert, in Form eines Pulvers enthält sowie Borsäure und/oder wenigstens ein Salz der Borsäure.

Die Bindemittelzusammensetzungen der Erfindung eignen sich zur Formulierung von antikorrosiven Anstrichmitteln mit verbessertem Korrosionsschutz. Durch die Verwendung der erfindungsgemäßen Bindemittelzusammensetzungen können zudem Klebstoffe mit in der Regel guten und vorteilhaft aufeinander abgestimmten Adhäsions- und Kohäsionseigenschaften erhalten werden, die auch als Ein-KomponentenFormulierungen hohe Lagerstabilität aufweisen. Weiterhin verleihen die erfindungsgemäßen Bindemittelzusammensetzungen Zementen verbesserte Materialeigenschaften, insbesondere verbesserte Festigkeit, wie Zug- und Reißfestigkeit, und ermöglichen Anstrichbeschichtungen mit hoher Haftung und guter Abriebfestigkeit.

Demzufolge betrifft ein weiterer Gegenstand der vorliegenden Erfindung die Verwendung einer Bindemittelzusammensetzung, wie zuvor definiert, in Anstrichmitteln.

Ein weiterer Gegenstand der vorliegenden Erfindung betrifft die Verwendung einer Bindemittelzusammensetzung, wie zuvor definiert, in Klebstoffen.

Ein weiterer Gegenstand der vorliegenden Erfindung betrifft die Verwendung einer Bindemittelzusammensetzung, wie zuvor definiert, in Zementen.

Weitere Gegenstände der Erfindung betreffen die Verwendungen von Borsäure und/oder wenigstens eines Salzes der Borsäure zur Modifizierung der Eigenschaften einer polymergebundenen Beschichtung, die als Bindemittel ein wasserunlösliches Polymer (P) enthält, sowie die Verwendung von Borsäure und/oder wenigstens eines Salzes der Borsäure zur Modifizierung der Eigenschaften eines Klebstoffs, der ein wasserunlösliches Polymer (P) enthält.

Besagte wasserunlösliche Polymere liegen in den zur Herstellung der Beschichtungen verwendeten Beschichtungsmitteln bzw. in den Klebstoffen in Form dispergierter Polymerpartikel vor. Die partikelförmigen Polymere P sind typischerweise durch radikalische, wässrige Emulsionspolymerisation ethylenisch ungesättigter Monomere M erhältlich, wobei die Monomere M die zuvor und im Folgenden genannten Monomere in den dort angegebenen Mengen umfassen.

Ein weiterer Gegenstand der Erfindung betrifft Verfahren zur Herstellung der erfindungsgemäßen Bindemittelzusammensetzungen, umfassend die Schritte
A) Herstellung einer wässrigen Dispersion eines wasserunlöslichen Polymers (P) mit einer Glasübergangstemperatur im Bereich von -50°C bis 50°C durch radikalische Polymerisation ethylenisch ungesättigter Monomere M; und
B) Zugabe von Borsäure und/oder wenigstens eines Salzes der Borsäure zu der in Schritt A) erhaltenen Polymerdispersion oder während deren Herstellung.

Weitere Gegenstände der Erfindung sind die im Folgenden beschriebenen, bevorzugt verwendeten Anstrichmittel, Klebstoffe und Zemente, die eine erfindungsgemäße Bindemittelzusammensetzung enthalten.

Im Rahmen der vorliegenden Erfindung umfasst der Ausdruck "Alkyl" geradkettige und verzweigte Alkylgruppen, speziell mit 1 bis 30 Kohlenstoffatomen, d.h. für "C₁-C₃₀-Alkyl" .

Geeignete kurzkettige Alkylgruppen sind beispielsweise geradkettige oder verzweigte C₁-C₇-Alkyl-, bevorzugt C₁-C₆-Alkyl- und besonders bevorzugt C₁-C₄-Alkylgruppen. Dazu zählen insbesondere Methyl, Ethyl, Propyl, Isopropyl, n-Butyl, 2-Butyl, sec.-Butyl, tert.-Butyl, n-Pentyl, 2-Pentyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 2-Hexyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl-2-methylpropyl, n-Heptyl, 2-Heptyl, 3-Heptyl, 2-Ethylpentyl, 1-Propylbutyl etc.

Geeignete längerkettige Alkylgruppen sind beispielsweise geradkettige und verzweigte C₈-C₃₀-Alkylgruppen, bevorzugt C₈-C₂₀-Alkylgruppen. Bevorzugt handelt es sich dabei um überwiegend lineare Alkylreste, wie sie auch in natürlichen oder synthetischen Fettsäuren und Fettalkoholen sowie Oxoalkoholen vorkommen. Dazu zählen beispielsweise n-Octyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl und n-Nonadecyl. Der Ausdruck Alkyl umfasst unsubstituierte und substituierte Alkylreste.

Die vorstehenden Ausführungen zu Alkyl gelten sinngemäß auch für die Alkylgruppen in Alkanol, Alkylamin und Alkancarbonsäuren.

Der Ausdruck "Alkylen" steht im Rahmen der vorliegenden Erfindung für geradkettige oder verzweigte Alkandiyl-Gruppen mit 1 bis 7 Kohlenstoffatomen, wie beispielsweise Methylen, 1,2-Ethylen, 1,2-Propylen, 1,3-Propylen, 1,2-Butylen, 1,3-Butylen, 1,4-Butylen, 2-Methyl-1,2-propylen, etc.

Unter primären Carbonsäureamiden und -diamiden werden im Rahmen dieser Erfindung Verbindungen mit einer oder zwei Amidgruppen -CONH₂ bezeichnet, bei denen das am Carbonylkohlenstoffatom gebundene Stickstoffatom neben Wasserstoff keine weiteren Substituenten trägt.

Die erfindungsgemäße Bindemittelzusammensetzung enthält ein wasserunlösliches Polymer (P) entweder, im Falle einer wässrigen Zusammensetzung, in Form dispergierter Polymerpartikel oder, im Falle einer festen Zusammensetzung, in Form eines Pulvers. Die Polymere (P) sind durch radikalische Polymerisation ethylenisch ungesättigter Monomere M erhältlich. Die Monomere M umfassen wenigstens ein gering wasserlösliches neutrales monoethylenisch ungesättigtes Monomer M1 und wenigstens ein monoethylenisch ungesättigtes Monomer M2, das wenigstens eine COOH-Gruppe und/oder wenigstens eine CONH₂-Gruppe trägt.

Unter Borsäure wird im Rahmen dieser Erfindung die monomere Borsäure sowie deren oligomeren Abkömmlinge, insbesondere Diborsäure, Triborsäure, Cyclotriborsäure, Tetraborsäure, Pentaborsäure, Hexaborsäure, Dekaborsäure, Dodekaborsäure und höhere Oligomere mit in der Regel bis zu 20 Boratomen, verstanden. Unter Borsäuresalzen, im Folgenden auch Borate genannt, werden hier entsprechend die Salze der Borsäure verstanden, insbesondere deren Alkali-, Erdalkali-, Ammonium-, Alkylammonium- und Hydroxyalkylammoniumsalze, die gegebenenfalls weitere Anionen wie etwa Halogenide enthalten können. Unter einem Alkylammoniumsalz wird hier ein Mono-, Di-, Tri- oder Tetraalkylammoniumsalz verstanden, dessen Alkylreste unabhängig voneinander 1 bis 10 und bevorzugt 1 bis 4 C-Atome haben. Unter einem Hydroxyalkylammoniumsalz wird hier ein Mono-, Di-, Tri- oder Tetraalkylammoniumsalz verstanden, dessen Alkylreste 1 bis 10 und bevorzugt 1 bis 4 C-Atome haben, wobei ein oder mehrere Alkylreste wenigstens eine Hydroxylgruppe tragen.

Unter Monomeren mit geringer Wasserlöslichkeit versteht man in der Regel solche Monomeren, deren Löslichkeit in einionisiertem Wasser bei 25°C und 1 bar 60 g/l und insbesondere 30 g/l nicht überschreitet und typischerweise im Bereich von 0,1 bis 30 g/l (25°C, 1 bar) liegt.

Die Monomere M1 sind neutral, d. h. sie werden im wässrigen weder protoniert noch wirken sie als Säure.

Das Monomer M1 umfasst eine monoethylenisch ungesättigte Doppelbindung und ist vorzugsweise ausgewählt unter Estern und Diestern α,β-ethylenisch ungesättigter Mono- und Dicarbonsäuren mit C₁-C₃₀-Alkanolen, Estern von Vinyl- oder Allylalkohol mit C₁-C₃₀-Monocarbonsäuren, Vinylaromaten, Amiden und Diamiden α,β-ethylenisch ungesättigter Mono- und Dicarbonsäuren mit C₁-C₃₀-Alkylaminen oder Di-C₁-C₃₀-alkylaminen und Mischungen davon.

Weitere geeignete Monomere M1 sind beispielsweise Vinylhalogenide, Vinylidenhalogenide und Mischungen davon.

Geeignete Ester und Diester α,β-ethylenisch ungesättigter Mono- und Dicarbonsäuren mit C₁-C₃₀-Alkanolen sind Methyl(meth)acrylat, Methylethacrylat, Ethyl(meth)acrylat, Ethylethacrylat, n-Propyl(meth)acrylat, Isopropyl(meth)acrylat, n-Butyl(meth)acrylat, sec.-Butyl(meth)acrylat, tert.-Butyl(meth)acrylat, tert.-Butylethacrylat, n-Hexyl(meth)acrylat, n-Heptyl(meth)acrylat, n-Octyl(meth)acrylat, 1,1,3,3-Tetramethylbutyl(meth)acrylat, Ethylhexyl(meth)acrylat, n-Nonyl(meth)acrylat, n-Decyl(meth)acrylat, n-Undecyl(meth)acrylat, Tridecyl(meth)acrylat, Myristyl(meth)acrylat, Pentadecyl(meth)acrylat, Palmityl(meth)acrylat, Heptadecyl(meth)acrylat, Nonadecyl(meth)acrylat, Arachinyl(meth)acrylat, Behenyl(meth)acrylat, Lignoceryl(meth)acrylat, Cerotinyl(meth)acrylat, Melissinyl(meth)acrylat, Palmitoleinyl(meth)acrylat, Oleyl(meth)acrylat, Linolyl(meth)acrylat, Linolenyl(meth)acrylat, Stearyl(meth)acrylat, Lauryl(meth)acrylat, Dimethylmaleat, Diethyl(meth) maleat, Di-(n-Propyl)-maleat, Diisopropylmaleat, Di-(n-Butyl)- maleat, Di-(n-Hexyl)-maleat, Di-(1,1,3,3-Tetramethylbutyl)-maleat, Di-(n-Nonyl)- maleat, Ditridecylmaleat, Dimyristylmaleat, Dipentadecylmaleat, Dipalmitylmaleat, Diarachinylmaleat und Mischungen davon.

Geeignete Ester von Vinylalkohol und Allylalkohol mit C₁-C₃₀-Monocarbonsäuren sind z. B. Vinylformiat, Vinylacetat, Vinylpropionat, Vinylbutyrat, Vinyllaurat, Vinylstearat, Versaticsäurevinylester, Allylformiat, Allylacetat, Allylpropionat, Allylbutyrat, Allyllaurat und Mischungen davon.

Geeignete Vinylaromaten sind Styrol, 2-Methylstyrol, 4-Methylstyrol, 2-(n-Butyl)styrol, 4-(n-Butyl)styrol, 4-(n-Decyl)styrol, insbesondere Styrol.

Geeignete Amide und Diamide α,β-ethylenisch ungesättigter Mono- und Dicarbonsäuren mit C₁-C₃₀-Alkylaminen oder Di-C₁-C₃₀-alkylaminen sind N-Methyl(meth)acrylamid, N-Ethyl(meth)acrylamid, N-Propyl(meth)acrylamid, N-(n-Butyl)(meth)acrylamid, N-(tert.-Butyl)(meth)acrylamid, N-(n-Octyl)(meth)acrylamid, N-(1,1,3,3-Tetramethylbutyl)(meth)acrylamid, N-Ethylhexyl(meth)acrylamid, N-(n-Nonyl)(meth)acrylamid, N-(n-Decyl)(meth)acrylamid, N-(n-Undecyl)(meth)acrylamid, N-Tridecyl(meth)acrylamid, N-Myristyl(meth)acrylamid, N-Pentadecyl(meth)acrylamid, N-Palmityl(meth)acrylamid, N-Heptadecyl(meth)acrylamid, N-Nonadecyl(meth)acrylamid, N-Arachinyl(meth)acrylamid, N-Behenyl(meth)acrylamid, N-Lignoceryl(meth)acrylamid, N-Cerotinyl(meth)acrylamid, N-Melissinyl(meth)acrylamid, N-Palmitoleinyl(meth)acrylamid, N-Oleyl(meth)acrylamid, N-Linolyl(meth)acrylamid, N-Linolenyl(meth)acrylamid, N-Stearyl(meth)acrylamid, N-Lauryl(meth)acrylamid, N,N-Dimethyl(meth)acrylamid, N,N-Diethyl(meth)acrylamid, Morpholinyl(meth)acrylamid, N,N'-Dimethylmaleinsäurediamid, N,N'-Diethylmaleinsäurediamid, N,N'-Dipropylmaleinsäurediamid, N,N'-Di-(tert.-butyl)-maleinsäurediamid, N,N'-Di-(n-octyl)-maleinsäurediamid, N,N'-Di-(n-nonyl)-maleinsäurediamid, N,N'-Ditridecylmaleinsäurediamid, N,N'-Dimyristylmaleinsäurediamid, N,N,N',N'-Tetramethylmaleinsäurediamid, N,N,N',N'-Tetraethylmaleinsäurediamid und Mischungen davon.

Geeignete Vinylhalogenide und Vinylidenhalogenide sind Vinylchlorid, Vinylidenchlorid, Vinylfluorid, Vinylidenfluorid und Mischungen davon.

Vorzugsweise ist das wenigstens eine Monomer M1 ausgewählt unter Estern α,β-ethylenisch ungesättigter Carbonsäuren mit C₁-C₁₀-Alkanolen und Vinylaromaten, insbesondere unter C₁-C₁₀-Alkylacrylaten und C₁-C₁₀-Alkylmethacrylaten, Vinylaromaten und C₁-C₁₀-Alkylcarbonsäurenitrilen und speziell unter Methylacrylat, n-Butylacrylat, Ethylhexylacrylat, Methylmethacrylat, Styrol und Acrylnitril.

Entsprechend einer bevorzugten Ausführungsform der Erfindung umfasst das Polymer (P) in einpolymerisierter Form wenigstens ein Monomer M1 und insbesondere wenigstens zwei Monomere M1, die ausgewählt sind unter Estern α,β-ethylenisch ungesättigter Carbonsäuren mit C₁-C₃₀-Alkanolen und Vinylaromaten. Entsprechend einer besonders bevorzugten Ausführungsform enthält das Polymer (P) in einpolymerisierter Form wenigstens ein Monomer M1.1 und wenigstens ein Monomer M1.2, wobei das wenigstens eine Monomer M1.1 ausgewählt ist unter C₁-C₁₀-Alkylacrylaten und vorzugsweise unter Methylacrylat, n-Butylacrylat und Ethylhexylacrylat, und wobei das wenigstens ein Monomer M1.2 ausgewählt ist unter C₁-C₁₀-Alkylmethacrylaten und Vinylaromaten und vorzugsweise unter Methylmethacrylat und Styrol.

Vorzugsweise liegt der Anteil der Monomere M1, bezogen auf die Gesamtmenge der Monomere M, im Bereich von 80 bis 99,9 Gew.-%, insbesondere im Bereich von 85 bis 99,9 Gew.-% und besonders bevorzugt im Bereich von 90 bis 99,5 Gew.-%.

Weiterhin sind insbesondere für Anwendungen in Zementen, in Anstrichmitteln und in Klebstoffen für starre Fußbodenbeläge, wie etwa Parkett, Polymere (P) bevorzugt, bei denen das Gewichtsverhältnis einpolymerisierter Monomere M1.1 und M1.2 im Bereich von 25:1 bis 1:20, vorzugsweise im Bereich von 15:1 bis 1:10 und speziell im Bereich von 5:1 bis 1:3 liegt. Insbesondere für Anwendungen in Klebstoffen für flexible Fußbodenbeläge sind Polymere (P) bevorzugt, die 50 bis 100 Gew.-% und vorzugsweise 80 bis 100 Gew.-% Monomere M1.1 sowie 0 bis 50 Gew.-% und vorzugsweise 0 bis 20 Gew.-% Monomere M1.2 in einpolymerisierter Form enthalten.

Die Monomere M2 sind erfindungsgemäß ausgewählt unter monoethylenisch ungesättigten Monomeren M2.1 mit wenigstens einer, z. B. 1, 2 oder 3 Carboxylgruppen (-COOH) und monoethylenisch ungesättigten Monomeren M2.2 mit wenigstens einer, z. B. 1, 2 oder 3 Carbonsäureamidgruppen (-COONH₂). Die Monomere M2.1 können zur Herstellung der Poymere (P) auch in Form ihrer Salze und im Falle der Di- oder Tricarbonsäuren auch in Form ihrer Anhydride eingesetzt werden.

Monomere M2.1 sind vorzugsweise ausgewählt unter monoethylenisch ungesättigten C₃-C₈-Mono- und C₄-C₈-Dicarbonsäuren.

Monomere M2.2 sind vorzugsweise ausgewählt unter primären Amiden monoethylenisch ungesättigter C₃-C₈-Monocarbonsäuren.

Geeignete monoethylenisch ungesättigte C₃-C₈-Mono- C₃-C₈-Di- und C₃-C₈-Tricarbonsäuren sind beispielsweise Acrylsäure, Methacrylsäure, Ethacrylsäure, α-Chloracrylsäure, Crotonsäure, Maleinsäure, Itaconsäure, Citraconsäure, Mesaconsäure, Glutaconsäure, Aconitsäure, Fumarsäure, die Halbester von monoethylenisch ungesättigten Dicarbonsäuren mit 4 bis 10, vorzugsweise 4 bis 6 C-Atomen, z. B. Maleinsäuremonomethylester. Besonders bevorzugt sind Acrylsäure, Methacrylsäure und Mischungen davon.

Geeignete primäre Amide monoethylenisch ungesättigter C₃-C₈-Mono- und C₃-C₈-Dicarbonsäuren sind insbesondere Acrylsäureamid, Methacrylsäureamid, Maleinsäurediamid, Fumarsäurediamid und Mischungen davon.

Vorzugsweise ist das wenigstens eine Monomer M2 ausgewählt unter monoethylenisch ungesättigten C₃-C₈-Monocarbonsäuren und primären Amiden monoethylenisch ungesättigter C₃-C₈-Monocarbonsäuren, insbesondere unter Acrylsäure, Methacrylsäure, Acrylamid und Methacrylamid, speziell unter Acrylsäure und Acrylamid.

Entsprechend einer bevorzugten Ausführungsform umfasst das wenigstens eine Monomer M2 wenigstens ein Monomer M2.1, vorzugsweise mit einer Carboxylgruppe, und gegebenenfalls wenigstens ein Monomer M2.2. Gemäß einer besonders bevorzugten Ausführungsform umfasst M2 sowohl wenigstens ein Monomer M2.1 mit einer Carboxylgruppe als auch wenigstens ein Monomer M2.2. Gemäß einer anderen bevorzugten Ausführungsform umfasst M2 wenigstens ein Monomer M2.2.

Entsprechend einer weiteren bevorzugten Ausführungsform der Erfindung umfasst das Polymer (P) in einpolymerisierter Form wenigstens zwei Monomere M2, die ausgewählt sind unter monoethylenisch ungesättigten C₃-C₈-Monocarbonsäuren und monoethylenisch ungesättigten primären C₃-C₈-Monocarbonsäureamiden. Entsprechend einer besonders bevorzugten Ausführungsform enthält das Polymer (P) in einpolymerisierter Form wenigstens ein Monomer M2.1 und wenigstens ein Monomer M2.2., wobei das wenigstens eine Monomer M2.1 vorzugsweise ausgewählt ist unter monoethylenisch ungesättigten C₃-C₈-Monocarbonsäuren und insbesondere unter C₃-C₄-Alkensäuren, und wobei das wenigstens ein Monomer M2.2. vorzugsweise ausgewählt ist unter primären Amiden monoethylenisch ungesättigter C₃-C₈-Monocarbonsäuren und insbesondere unter C₃-C₄-Alkensäureamiden.

Bevorzugte Polymere (P) sind solche, bei denen der Anteil der Monomere M2 im Bereich von 0,1 bis 20 Gew.-%, besonders bevorzugt im Bereich von 0,2 bis 15 Gew.-% und insbesondere im Bereich von 0,5 bis 10 Gew.-%, jeweils bezogen auf das Gesamtgewicht der zur Polymerisation eingesetzten Monomere M, liegt. Das Gewichtsverhältnis der in Polymere (P) einpolymerisierten Monomere M2.1 und M2.2 wird üblicherweise im Bereich von 25:1 bis 1:50 liegen, vorzugsweise im Bereich von 10:1 bis 1:20 und insbesondere im Bereich von 2:1 bis 1:4 liegen.

Die Monomere M können zusätzlich zu den Monomeren M1 und M2 wenigstens ein Monomer M3 umfassen, das ausgewählt ist unter monoethylenisch ungesättigten Monomeren M3.1, die eine Hydroxylgruppe enthalten, monoethylenisch ungesättigten Monomeren M3.2, die wenigstens eine Harnstoffgruppe enthalten und monoethylenisch ungesättigten Monomeren M3.3, die wenigstens eine Oligo- oder Poly-C₂-C₄-alkylenethergruppe tragen.

Der Anteil der Monomere M3, bezogen auf die Gesamtmenge der Monomeren M, liegt typischerweise im Bereich von 0 bis 19,9 Gew.-%, insbesondere im Bereich von 0 bis 14,8 Gew.-% und speziell im Bereich von 0 bis 9,5 Gew.-%, z. B. im Bereich von 0,1 bis 19,9 Gew.-%, insbesondere im Bereich von 0,2 bis 14,8 Gew.-% und speziell im Bereich von 0,5 bis 9,5 Gew.-%.

Monomere M3.1 sind vorzugsweise ausgewählt unter Hydroxyalkylestern monoethylenisch ungesättigter Monocarbonsäuren und Hydroxyalkylamiden monoethylenisch ungesättigter Monocarbonsäuren.

Geeignete Hydroxyalkylester monoethylenisch ungesättigter Monocarbonsäuren sind beispielsweise 2-Hydroxyethylacrylat, 2-Hydroxyethylmethacrylat, 2-Hydroxyethylethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat, 4-Hydroxybutylacrylat, 4-Hydroxybutylmethacrylat, 6-Hydroxyhexylacrylat, 6-Hydroxyhexylmethacrylat, 3-Hydroxy-2-ethylhexylacrylat, 3-Hydroxy-2-ethylhexylmethacrylat und Mischungen davon.

Geeignete Hydroxyalkylamide monoethylenisch ungesättigter Monocarbonsäuren, sind beispielsweise N-(2-Hydroxyethyl)acrylamid, N-(2-Hydroxyethyl)methacrylamid, N-(2-Hydroxyethyl)ethacrylamid, N-(2-Hydroxypropyl)acrylamid, N-(2-Hydroxypropyl)-methacrylamid, N-(3-Hydroxypropyl)acrylamid, N-(3-Hydroxypropyl)methacrylamid, N-(3-Hydroxybutyl)acrylamid, N-(3-Hydroxybutyl)methacrylamid, N-(4-Hydroxybutyl)acrylamid, N-(4-Hydroxybutyl)methacrylamid, N-(6-Hydroxyhexyl)-acrylamid, N-(6-Hydroxyhexyl)methacrylamid, N-(3-Hydroxy-2-ethylhexyl)acrylamid, N-(3-Hydroxy-2-ethylhexyl)methacrylamid, N-Methyl-N-(2-hydroxyethyl)acrylamid, N-Methyl-N-(2-hydroxyethyl)methacrylamid, N-Methyl-N-(2-hydroxyethyl)ethacrylamid, N-Methyl-N-(2-hydroxypropyl)acrylamid, N-Methyl-N-(2-hydroxypropyl)methacrylamid, N-Methyl-N-(3-hydroxypropyl)acrylamid, N-Methyl-N-(3-hydroxypropyl)methacrylamid, N-Methyl-N-(3-hydroxybutyl)acrylamid, N-Methyl-N-(3-hydroxybutyl)methacrylamid, N-Methyl-N-(4-hydroxybutyl)acrylamid, N-Methyl-N-(4-hydroxybutyl)methacrylamid, N-Methyl-N-6-hydroxyhexyl)acrylamid, N-Methyl-N-(6-Hydroxyhexyl)methacrylamid, N-Methyl-N-(3-hydroxy-2-ethylhexyl)acrylamid, N-Methyl-N-(3-hydroxy-2-ethylhexyl)-methacrylamid und Mischungen davon.

Geeignete Monomere M3.2 sind beispielsweise N-Vinylhamstoff, N-(2-Acryloxyethyl)-imidazolidin-2-on und N-(2-Methacryloxyethyl)imidazolidin-2-on (2-Ureidomethacrylat, UMA).

Geeignete Monomere M3.3 sind beispielsweise die Monoester monoethylenisch ungesättigter Carbonsäuren mit Oligo- bzw. Poly-C₂-C₄-alkylenethern der allgemeinen Formel (A) 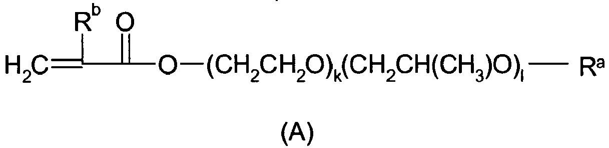 worin
die Reihenfolge der Alkylenoxideinheiten beliebig ist,
k und I unabhängig voneinander für eine ganze Zahl im Bereich von 0 bis 100, vorzugsweise im Bereich von 0 bis 50 und insbesondere im Bereich von 0 bis 50 stehen, wobei die Summe aus k und I mindestens 3, insbesondere 4, z. B. 3 bis 200 und insbesondere 4 bis 100, beträgt,
R^{a} für Wasserstoff, C₁-C₃₀-Alkyl, C₅-C₈-Cycloalkyl oder C₆-C₁₄-Aryl steht, und
R^{b} für Wasserstoff oder C₁-C₈-Alkyl, insbesondere Wasserstoff oder Methyl, steht.

Bevorzugt steht k für eine ganze Zahl von 3 bis 50, insbesondere 4 bis 30. Bevorzugt steht I für eine ganze Zahl von 0 bis 30, insbesondere 0 bis 20. Besonders bevorzugt ist I = 0. Besonders bevorzugt liegt die Summe aus k und I im Bereich von 3 bis 50 und insbesondere im Bereich von 4 bis 40.

Vorzugsweise steht R^{a} in der Formel (A) für Wasserstoff, C₁-C₂₀-Alkyl, z. B. Methyl, Ethyl, n-Propyl, Isopropyl, n-Butyl oder sec-Butyl, n-Pentyl, n-Hexyl, Octyl, 2-Ethylhexyl, Decyl, Lauryl, Palmityl oder Stearyl. Besonders bevorzugt steht R^{a} für Wasserstoff oder C₁-C₄-Alkyl.

Bevorzugt steht R^{b} für Wasserstoff oder Methyl.

Vorzugsweise ist das wenigstens eine Monomer M3 ausgewählt unter den Monomeren M3.1 Hydroxy-C₂-C₄-alkylester von C₃-C₅-Alkensäuren, dem Monomer M3.2 2-Ureidomethacrylat und den Monomeren M3.3 der allgemeinen Formel (A') 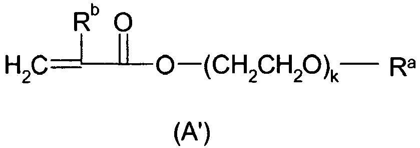 worin
k für eine ganze Zahl von 4 bis 40 steht, R^{a} für Wasserstoff oder C₁-C₄-Alkyl steht und R^{b} Wasserstoff oder Methyl bedeutet.

Bevorzugte Polymere (P) sind durch eine Polymerisation erhältlich, bei der der Anteil der Monomere M3.1 im Bereich von 0 bis 19,9 Gew.-%, insbesondere im Bereich von 0 bis 14,8 Gew.-% und speziell im Bereich von 0 bis 9,5 Gew.-%, z. B. im Bereich von 0,1 bis 19,9 Gew.-%, insbesondere im Bereich von 0,1 bis 14,8 Gew.-% und speziell im Bereich von 0,2 bis 9,5 Gew.-%, bezogen auf die Gesamtmenge der Monomeren M, liegt.

Des Weiteren sind bevorzugte Polymere (P) solche, bei denen der Anteil der Monomere M3.2 im Bereich von 0 bis 19,9 Gew.-%, insbesondere im Bereich von 0 bis 14,8 Gew.-% und speziell im Bereich von 0 bis 9,5 Gew.-%, z. B. im Bereich von 0,1 bis 19,9 Gew.-%, insbesondere im Bereich von 0,1 bis 14,8 Gew.-% und speziell im Bereich von 0,2 bis 9,5 Gew.-%, bezogen auf die Gesamtmenge der Monomeren M, liegt.

Bevorzugte Polymere (P) sind zudem solche, bei denen der Anteil der Monomere M3.3 im Bereich von 0 bis 19,9 Gew.-%, insbesondere im Bereich von 0 bis 14,8 Gew.-% und speziell im Bereich von 0 bis 9,5 Gew.-%, z. B. im Bereich von 0,1 bis 19,9 Gew.-%, insbesondere im Bereich von 0,1 bis 14,8 Gew.-% und speziell im Bereich von 0,2 bis 9,5 Gew.-%, bezogen auf die Gesamtmenge der Monomeren M, liegt.

Das erfindungsgemäß verwendete Polymer (P) kann neben den vorgenannten monoethylenisch ungesättigten Monomeren auch geringe Mengen mehrfach ethylenisch ungesättigter Monomere umfassen, welche bei der Herstellung des Polymeren zu einer internen Vernetzung führen. Der Anteil derartiger Monomere wird jedoch in der Regel 1 Gew.-%, insbesondere 0,5 Gew.-% und speziell 0,1 Gew.-%, bezogen auf die Gesamtmenge der das Polymer konstituierenden Monomere M nicht überschreiten. Beispiele für mehrfach ethylenisch ungesättigte Monomere sind Di- und Triester ethylenisch ungesättigter Carbonsäuren, insbesondere die Bisacrylate von Di- und Triolen und die Trisacrylate von Tri- und Tetraolen, z. B. die Bisacrylate und die Bismethacrylate von Ethylenglykol, Diethylenglykol, Triethylenglykol, Neopentylglykol oder Polyethylenglykolen, Vinyl und Allylester gesättigter oder ungesättigter Dicarbonsäuren, Vinyl und Allylester monoethylenisch ungesättigter Monocarbonsäuren, sowie N,N-Diallylamine mit Wasserstoff oder eine Alkylgruppe als weiteren Substituenten am Stickstoff, insbesondere N,N-Diallylamin und N,N-Diallyl-N-methylamin. Vorzugsweise umfasst das erfindungsgemäß verwendete Polymer (P) jedoch keine mehrfach ethylenisch ungesättigten Monomere.

Weitere geeignete Monomere M sind beispielsweise monoethylenisch ungesättigte Phosphon- und Sulfonsäuren, z. B. Vinylphosphonsäure und Allylphosphonsäure, Vinylsulfonsäure, Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Styrolsulfonsäuren und 2-Acrylamido-2-methylpropansulfonsäure, Styrolsulfonsäuren und deren Derivate, wie etwa Styrol-4-sulfonsäure und Styrol-3-sulfonsäure, sowie die Salze, insbesondere die Erdalkalioder Alkalimetallsalze der vorgenannten Säuren, wie etwa Natrium-styrol-3-sulfonat und Natrium-styrol-4-sulfonat.

Der Anteil an Monomeren M, bei denen es sich um Phosphonsäuren, Sulfonsäuren oder deren Salze handelt, liegt bezogen auf die Gesamtmenge der Monomere M, im Bereich von 0 bis 2 Gew.-% und ist vorzugsweise ≤ 0,1 Gew.-%.

In einer bevorzugten Ausführungsform der vorliegenden Erfindung ist das Polymer, bezogen auf die Gesamtmenge der Monomere M, zu wenigstens 98 Gew.-%, insbesondere zu wenigstens 99,5 Gew.-% und speziell zu wenigstens 99,9 Gew.-% oder 100 Gew.-% aufgebaut aus monoethylenisch ungesättigten Monomeren M, wobei die Monomere M in diesem Fall vorzugsweise die folgenden Monomere umfassen:
- 80 bis 99,9 Gew.-%, häufig 85 bis 99,9 Gew.-%, insbesondere 90 bis 99,9 Gew.-% und speziell 90 bis 99,5 Gew.-% Monomere M1, die unter gering wasserlöslichen neutralen monoethylenisch ungesättigten Monomeren und insbesondere unter Estern α,β-ethylenisch ungesättigter Carbonsäuren mit C₁-C₃₀-Alkanolen und Vinylaromaten ausgewählt sind;
- 0,1 bis 20 Gew.-%, häufig 0,2 bis 15 Gew.-%, insbesondere 0,5 bis 10 Gew.-% und speziell 0,5 bis 8 Gew.-% Monomere M2, die unter monoethylenisch ungesättigten Monomeren mit wenigstens eine Carboxylgruppe und/oder wenigstens eine Carbonsäureamidgruppe (CONH₂) und insbesondere unter monoethylenisch ungesättigten C₃-C₈-Monocarbonsäuren und/oder primären Amiden monoethylenisch ungesättigter C₃-C₈-Monocarbonsäuren sowie deren Mischungen ausgewählt sind;
   sowie gegebenenfalls:
- 0 bis 19,9 Gew.-%, insbesondere 0 bis 14,8 Gew.-% und speziell 0 bis 9,5 Gew.-% Monomere M3.1, z. B. 0,1 bis 19,9 Gew.-%, insbesondere 0,1 bis 14,8 Gew.-% und speziell von 0,2 bis 9,5 Gew.-%, die unter monoethylenisch ungesättigten Monomeren mit einer Hydroxylgruppe und insbesondere unter Hydroxy-C₂-C₄-alkylestern von C₃-C₅-Alkensäuren ausgewählt sind;
   und / oder:
- 0 bis 19,9 Gew.-%, insbesondere 0 bis 14,8 Gew.-% und speziell 0 bis 9,5 Gew.-% Monomere M3.2, z. B. 0,1 bis 19,9 Gew.-%, insbesondere 0,1 bis 14,8 Gew.-% und speziell von 0,2 bis 9,5 Gew.-%, die unter monoethylenisch ungesättigten Monomeren mit wenigstens einer Harnstoffgruppe, insbesondere unter N-(2-Acryloxyethyl)imidazolidin-2-on und N-(2-Methacryloxyethyl)imidazolidin-2-ausgewählt sind;
   und / oder:
- 0 bis 19,9 Gew.-%, insbesondere 0 bis 14,8 Gew.-% und speziell 0 bis 9,5 Gew.-% Monomere M3.3, z. B. 0,1 bis 19,9 Gew.-%, insbesondere 0,1 bis 14,8 Gew.-% und speziell von 0,2 bis 9,5 Gew.-%, die unter monoethylenisch ungesättigten Monomeren mit wenigstens einer Oligo- oder Poly-C₂-C₄-alkylenethergruppe, insbesondere unter den vorgenannten Monomeren der allgemeinen Formel (A') ausgewählt sind;
wobei die Gesamtmenge an Monomeren M3 typischerweise ≤ 20 Gew.-%, insbesondere ≤ 15 Gew.-% und speziell ≤ 10 Gew.-% ist, z. B. 0,1 bis 19,9 Gew.-%, insbesondere 0,1 bis 14,8 Gew.-% und speziell von 0,2 bis 9,5 Gew.-%, wenn die Monomere M ein oder mehrere Monomere M3 umfassen.

Neben dem Polymer enthalten die wässrigen Polymerdispersionen typischerweise noch wenigstens eine oberflächenaktive Substanz zur Stabilisierung der Polymerpartikel. Hierzu zählen ionische und nicht ionische Emulgatoren sowie ionische und nichtionische Schutzkolloide bzw. Stabilisatoren. Unter Emulgatoren versteht man im Unterschied zu Schutzkolloiden oberflächenaktive Substanzen, deren Molekulargewicht (Zahlenmittel) üblicherweise unterhalb 2000 g/mol und speziell unterhalb 1500 g/mol liegt. Bei Schutzkolloiden wiederum handelt es sich üblicherweise um in Wasser lösliche Polymere mit einem zahlenmittleren Molekulargewicht oberhalb 2000 g/mol, z. B. im Bereich von 2000 bis 100000 g/mol und insbesondere im Bereich von 5000 bis 50000 g/mol. Selbstverständlich können Schutzkolloide und Emulgatoren im Gemisch eingesetzt werden.

Die Menge an oberflächenaktiver Substanz liegt üblicherweise im Bereich von 0,1 bis 10 Gew.-%, vorzugsweise 0,2 bis 5 Gew.-% bezogen auf 100 Gew.-% Polymer, bzw. auf 100 Gew.-% der das Polymer konstituierenden Monomere M.

Vorzugsweise enthalten die erfindungsgemäß verwendeten Polymerdispersionen ausschließlich Emulgatoren. Insbesondere hat es sich bewährt, wenn die Polymerdispersion eine Kombination aus wenigstens einem anionischen und wenigstens einem nicht ionischen Emulgator als oberflächenaktive Substanzen enthält. Die Emulgatoren sind in der Regel nicht polymerisierbar, d. h. sie weisen keine ethylenisch ungesättigten Gruppen auf, die in einer radikalischen Polymerisation polymerisierbar sind. Ein Teil oder die Gesamtmenge der Emulgatoren kann aber polymerisierbar sein. Solche polymerisierbaren Emulgatoren enthalten ethylenisch ungesättigten Gruppen und sind entweder nicht-ionische oder anionische Emulgatoren. Polymerisierbare nichtionische Emulgatoren sind vorzugsweise ausgewählt unter C₂-C₃-Alkoxilaten von Alkenolen, insbesondere von Prop-2-en-1-ol, und Monoestern von monoethylenisch ungesättigten Mono- oder Dicarbonsäuren mit Poly-C₂-C₃-alkylenethern, wobei der Alkoxilierungsgrad jeweils 3 bis 100 beträgt. Polymerisierbare anionische Emulgatoren sind vorzugsweise ausgewählt unter den entsprechenden Schwefelsäure- und Phosphorsäurehalbestern der zuvor genannten nichtionischen polymerisierbaren Emulgatoren.

Zu den nicht polymerisierbaren anionischen Emulgatoren zählen üblicherweise aliphatische Carbonsäuren mit in der Regel wenigstens 10 C-Atomen sowie deren Salze, insbesondere deren Ammonium- und Alkalimetallsalze, aliphatische, araliphatische und aromatische Sulfonsäuren mit in der Regel wenigstens 6 C-Atomen sowie deren Salze, insbesondere deren Ammonium- und Alkalimetallsalze, Schwefelsäurehalbester ethoxylierter Alkanole und Alkylphenole sowie deren Salze, insbesondere deren Ammonium- und Alkalimetallsalze sowie Alkyl-, Aralkyl- und Arylphosphate einschließlich Phosphorsäurehalbester von Alkanolen und Alkylphenolen.

Beispiele für geeignete anionische Emulgatoren sind: Alkalimetallsalze von Dialkylestern der Sulfobernsteinsäure sowie Alkali- und Ammoniumsalze von Alkylsulfaten (Alkylrest: C₈- bis C₁₂), von Schwefelsäurehalbestern ethoxylierter Alkanole (EO-Grad: 4 bis 30, Alkylrest: C₁₂- bis C₁₈), von Schwefelsäurehalbestern ethoxylierter Alkylphenole (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉- bis C₁₈). Beispiele für geeignete Emulgatoren sind auch die im Folgenden angegebenen Verbindungen der allgemeinen Formel 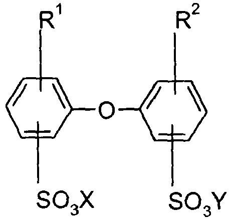 worin R¹ und R² Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R¹ und R² Wasserstoff oder lineare oder verzweigte Alkylreste mit 6 bis 18 C-Atomen und insbesondere mit 6, 12 und 16 C-Atomen, wobei R¹ und R² nicht beide gleichzeitig Wasserstoff sind. X und Y sind bevorzugt Natrium-, Kalium- oder Ammoniumionen, wobei Natrium besonders bevorzugt ist. Besonders vorteilhaft sind Verbindungen, in denen X und Y Natrium, R¹ ein verzweigter Alkylrest mit 12 C-Atomen und R² Wasserstoff ist oder eine der für R¹ angegebenen, von Wasserstoff verschiedenen Bedeungen hat. Häufig werden technische Gemische verwendet, die einen Anteil von 50 bis 90 Gew.-% des monoalkylierten Produktes aufweisen, beispielsweise Dowfax^{®} 2A1 (Warenzeichen der Dow Chemical Company).

Geeignete nichtionische Emulgatoren sind typischerweise ethoxylierte Alkanole mit 8 bis 36 C-Atomen im Alkylrest, ethoxylierte Mono-, Di- und Trialkylphenole mit typischerweise 4 bis 12 C-Atomen in den Alkylresten, wobei die ethoxylierten Alkanole und Alkylphenole typischerweise einen Ethoxylierungsgrad im Bereich von 3 bis 50 aufweisen.

Weitere geeignete Emulgatoren finden sich beispielsweise in Houben-Weyl, Methoden der organischen Chemie, Band 14/1, Makromolekulare Stoffe, Georg Thieme Verlag, Stuttgart, 1961, S. 192 bis 208.

Erfindungsgemäß handelt es sich um wässrige Polymerdispersionen, d.h. das Polymer liegt als heterogene Phase in Form feinteiliger Partikel einer homogenen wässrigen Phase vor. Die homogene wässrige Phase kann neben Wasser sowie den bei der Herstellung typischerweise eingesetzten Hilfsstoffen wie oberflächenaktiven Substanzen, Säuren, Basen, Zerfallsprodukten aus der Polymerisationsreaktion noch geringe Mengen an mit Wasser mischbaren organischen Lösungsmitteln enthalten. Der Anteil der zuletzt genannten Komponenten wird typischerweise 1 Gew.-%, bezogen auf das Gesamtgewicht der Dispersion nicht überschreiten.

Bei den in den wässrigen Polymerdispersion kann es sich um das unmittelbare Produkt einer radikalischen, wässrigen Emulsionspolymerisation oder um eine Sekundärdispersion handeln. Dabei kann die radikalische, wässrige Emulsionspolymerisation auch als sogenannte Miniemulsionspolymerisation durchgeführt werden, d.h. die zu polymerisierenden Monomere werden in Form einer wässrigen Miniemulsion eingesetzt, worin die Monomertröpfchen sehr kleine Durchmesser aufweisen (volumenmittlerer Tröpfchendurchmesser der Monomeremulsion < 1 µm, insbesondere < 0,6 µm). Unter einer Sekundärdispersion versteht man eine wässrige Polymerdispersion, deren Polymer zunächst in einer Lösungspolymerisation oder in sonstiger Weise hergestellt und anschließend in einem wässrigen Medium, gegebenenfalls unter Entfernung von organischem Lösungsmittel aus der Lösungspolymerisation, dispergiert oder emulgiert wird. Im Hinblick auf die Anwendungen sind Polymerdispersionen bevorzugt, die mittels radikalischer, wässriger Emulsionspolymerisation hergestellt wurden.

Für die erfindungsgemäßen verwendeten Polymerdispersionen hat es sich als vorteilhaft erwiesen, wenn man das im Folgenden beschriebene Verfahren einer radikalischen, wässrigen Emulsionspolymerisation der das Polymer (P) konstituierenden Monomere M anwendet. Bei diesem Verfahren führt man eine radikalische, wässrige Emulsionspolymerisation der ethylenisch ungesättigten Monomere M nach einem Monomerzulaufverfahren durch, wobei man vorzugsweise im Polymerisationsreaktor wenigstens ein teilchenförmiges Saatpolymer vorlegt. In diesem Zusammenhang bedeutet "vorlegen", dass das Saatpolymer entweder vor Beginn der Polymerisation zugegeben oder vor der eigentlichen Emulsionspolymerisation im Polymerisationsreaktor durch in-situ-Emulsionspolymerisation gebildet wird.

Unter einem Monomerzulaufverfahren versteht man hier und im Folgenden, dass man wenigstens 90 % und insbesondere wenigstens 95 % der zu polymerisierenden Monomere unter Polymerisationsbedingungen in einen Polymerisationsreaktor gibt, in dem sich bereits ein erstes teilchenförmiges Saatpolymer, typischerweise in Form einer wässrigen Dispersion des Saatpolymeren, findet.

Unter dem Begriff "Saatpolymer" versteht der Fachmann ein feinteiliges Polymer in Form einer wässrigen Polymerdispersion. Die gewichtsmittlere Teilchengröße der im erfindungsgemäßen Verfahren eingesetzten Saatpolymere (Gewichtsmittel, d₅₀-Wert) liegt typischerweise unterhalb 200 nm, häufig im Bereich von 10 bis 150 nm und insbesondere im Bereich von 20 bis 120 nm. Die Monomerzusammensetzung der Saatpolymere ist von untergeordneter Bedeutung. Geeignet sind sowohl Saatpolymere, die überwiegend aus vinylaromatischen Monomeren und insbesondere aus Styrol aufgebaut sind (sogenannte Styrol-Saat), als auch Saatpolymere, die überwiegend aus C₁-C₁₀-Alkylacrylaten und/oder C₁-C₁₀-Alkylmethacrylaten, z. B. aus einer Mischung aus Butylacrylat und Methylmethacrylat aufgebaut sind. Neben diesen Hauptmonomeren, die typischerweise wenigstens 80 Gew.-% und insbesondere wenigstens 90 Gew.-% des Saatpolymeren ausmachen, können die Saatpolymere auch davon verschiedene Monomere, insbesondere solche mit einer erhöhten Wasserlöslichkeit, z. B. Monomere mit wenigstens einer Säurefunktion und/oder neutrale Monomere mit erhöhter Wasserlöslichkeit einpolymerisiert enthalten. Der Anteil derartiger Monomere wird in der Regel 20 Gew.-% und insbesondere 10 Gew.-% nicht überschreiten und liegt, sofern vorhanden, typischerweise im Bereich von 0,1 bis 10 Gew.-%, bezogen auf die Gesamtmenge der das Saatpolymer konstituierenden Monomere.

Die radikalische, wässrige Emulsionspolymerisation erfolgt typischerweise in Gegenwart oberflächenaktiver Substanzen wie zuvor beschrieben. Vorzugsweise werden im erfindungsgemäßen Verfahren ausschließlich Emulgatoren eingesetzt. Insbesondere hat es sich bewährt, eine Kombination aus wenigstens einem anionischen und wenigstens einem nicht ionischen Emulgator als oberflächenaktive Substanz zu verwenden.

Typischerweise werden die oberflächenaktiven Substanzen in Mengen von 0,1 bis 10 Gew.-%, insbesondere in Mengen von 0,2 bis 5 Gew.-%, bezogen auf das Gewicht der zu polymerisierenden Monomere M eingesetzt.

Bei den zur radikalischen Emulsionspolymerisation eingesetzten Initiatoren handelt es sich üblicherweise um wasserlösliche, Radikale bildende Substanzen

Wasserlösliche Initiatoren für die Emulsionspolymerisation sind organische oder anorganische Peroxid-Verbindungen, d.h. Verbindungen mit wenigstens einer Peroxid- oder Hydroperoxid-Gruppe, z. B. Ammonium- und Alkalimetallsalze der Peroxodischwefelsäure, z. B. Natriumperoxodisulfat, Wasserstoffperoxid oder organische Peroxide, z. B. tert-Butylhydroperoxid.

Geeignet sind auch sogenannte Reduktions-Oxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Peroxid-Verbindungen. Bei der Reduktionskomponenten handelt es sich z. B. um Alkalimetallsalze der schwefligen Säure, wie z. B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z. B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z. B. die Reduktionskomponente, können auch Mischungen sein z. B. eine Mischung aus dem Natriumsalz der Hydroxymethansulfinsäure und Natriumdisulfit.

Die genannten Initiatoren werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im Allgemeinen 0,1 bis 10 Gew.-%, bevorzugt 0,2 bis 5 Gew.-%, bezogen auf die zu polymerisierenden Monomere. Es können auch mehrere, verschiedene Initiatoren bei der Emulsionspolymerisation Verwendung finden.

Bei der Polymerisation können Regler eingesetzt werden, z. B. in Mengen von 0 bis 1 Gew.-%, bezogen auf die zu polymerisierenden Monomere M. Hierdurch wird die Molmasse des Polymerisats verringert. Geeignet sind beispielsweise Verbindungen mit einer Thiol-Gruppe wie tert.-Butylmercaptan, Mercaptoethanol, Thioglykolsäure, Thioglykolsäureethylester, Mercaptopropyltrimethoxysilan und tert.-Dodecylmercaptan. Gegebenenfalls ist es von Vorteil, den Regler im Verlauf der Polymerisation über einen längeren Zeitraum, beispielsweise parallel zur Zugabe der Monomere M, zuzugeben. Die Zugabe kann dann mit kontinuierlicher Zulaufrate oder zunehmender oder abnehmender Zulaufrate erfolgen.

Das erfindungsgemäße Verfahren wird als Zulaufverfahren durchgeführt, d. h. wenigstens 90 % der zu polymerisierenden Monomere M werden im Verlauf der Polymerisation unter Polymerisationsbedingungen in den Polymerisationsreaktor gegeben. Die Zugabe kann kontinuierlich oder stufenweise erfolgen. Im Verlauf der Polymerisation kann die Monomerzusammensetzung einmal, mehrfach oder auch kontinuierlich geändert werden (Gradientenfahrweise).

Bevorzugt geht man im erfindungsgemäßen Verfahren so vor, dass man ein extern erzeugtes Saatpolymer in Form einer wässrigen Dispersion, gegebenenfalls zusammen mit Wasser vorlegt. Alternativ kann das Saatpolymer in-situ durch Emulsionspolymerisation, vorzugsweise unter Verwendung einer kleinen Teilmenge der Monomere M, vorab hergestellt werden. Nach Vorlage oder Synthese des Saatpolymers wird, falls noch nicht geschehen, auf Polymerisationstemperatur erhitzt und dann eine Teilmenge des Polymerisationsinitiators, z. B. 1 bis 20 Gew.-% und insbesondere 5 bis 15 Gew.-%, bezogen auf die Gesamtmenge des Initiators zugegeben. Man kann auch so vorgehen, dass man zunächst die Teilmenge des Polymerisationsinitiators zugibt und anschließend auf Polymerisationstemperatur erhitzt. Vorzugsweise erhält zu diesem Zeitpunkt der Polymerisationsreaktor weniger als 5 Gew.-% der zu polymerisierenden Monomere M. Anschließend erfolgt die Zugabe der zu polymerisierenden Monomere in den Polymerisationsreaktor unter Polymerisationsbedingungen. Die Zugabe erfolgt üblicherweise über einen längeren Zeitraum von wenigstens 30 Minuten, z. B. 30 Minuten bis 10 h, insbesondere über einen Zeitraum von 1 h bis 6 h. Wie bereits erläutert, kann die Zugabe mit konstanter, zunehmender oder abnehmender Zugaberate erfolgen. Gemäß einer ersten bevorzugten Ausführungsform erfolgt die Zugabe zu Beginn der Polymerisation mit zunehmender Zulaufrate. Gemäß einer anderen, ebenfalls bevorzugten Ausführungsform des erfindungsgemäßen Verfahrens erfolgt die Zugabe mit konstanter Zugaberate. Die Monomere können als solche zugegeben werden. Vorzugsweise erfolgt die Zugabe der Monomere in Form einer wässrigen Monomeremulsion, die typischerweise wenigstens einen Teil, vorzugsweise wenigstens 70 Gew.-% der in der Emulsionspolymerisation eingesetzten oberflächenaktiven Substanzen enthält. Typischerweise weist diese Monomeremulsion einen Monomergehalt im Bereich von 60 bis 85 Gew.-% und insbesondere im Bereich von 65 bis 80 Gew.-% auf. Es ist prinzipiell möglich, die Monomere bzw. die Monomeremulsion über mehrere Zuläufe in den Polymerisationsreaktor zu geben, wobei die Monomerenzusammensetzung der einzelnen Zuläufe voneinander verschieden sein kann. In der Regel reicht es jedoch aus, die Monomere als Mischung über einen Zulauf in den Polymerisationsreaktor zu geben. Sofern die Monomere in Form einer wässrigen Emulsion in den Polymerisationsreaktor gegeben werden, kann es von Vorteil sein, die Monomere unmittelbar vor ihrer Zugabe und nach Maßgabe ihrer Zugabe in dem Polymerisationsreaktor frisch zu emulgieren, beispielsweise nach einem kontinuierlichen Verfahren. Man kann auch die Monomeremulsion zunächst herstellen und anschließend mit der gewünschten Zugaberate in den Polymerisationsreaktor einbringen.

Üblicherweise erfolgt parallel zur Monomerzugabe die Zugabe wenigstens einer Teilmenge oder der Gesamtmenge des Polymerisationsinitiators. Typischerweise wird man wenigstens 80 % des für die Emulsionspolymerisation benötigten Polymerisationsinitiators, insbesondere 85 bis 95 % des Polymerisationsinitiators im Verlauf der Polymerisationsreaktion in den Polymerisationsreaktor geben. Die Zugabe des Polymerisationsinitiators kann mit konstanter Zugaberate oder mit einer sich ändernden, z. B. einer abnehmenden oder zunehmenden Zugaberate erfolgen.

Polymerisationstemperatur und Polymerisationsdruck sind von untergeordneter Bedeutung. Die Emulsionspolymerisation erfolgt typischerweise bei Temperaturen im Bereich von 30 bis 130, vorzugsweise im Bereich von 50 bis 100°C. Der Polymerisationsdruck liegt üblicherweise im Bereich des Normaldrucks, d.h. bei Umgebungsdruck, kann aber auch leicht darüber oder darunter liegen, z.B. im Bereich von 800 bis 1500 mbar.

Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet.

In der Regel empfiehlt es sich, nach Beendigung der eigentlichen Polymerisationsreaktion, d. h. nach Beendigung der Zugabe der zu polymerisierenden Monomere bzw. nach einem Umsatz der im Polymerisationsreaktor befindlichen Monomere von mindestens 95 %, eine chemische und/oder physikalische Desodorierung zur Entfernung nicht polymerisierter Monomere durchzuführen. In der Regel wird man wenigstens eine chemische Desodorierung durchführen. Unter einer chemischen Desodorierung versteht man eine Nachpolymerisationsphase, die durch Zugabe wenigstens eines weiteren Polymerisationsinitiators, insbesondere eines der vorgenannten Redoxinitiatorsysteme ausgelöst wird. Verfahren hierzu sind bekannt, beispielsweise aus DE-A-4435422, DE-A-4435423 sowie DE-A-4419518. Die Absenkung der Restmonomere kann auch durch kombinierte Maßnahmen einer chemischen und physikalischen Desodorierung erfolgen, wobei vorzugsweise die physikalische Desodorierung im Anschluss an die chemische Desodorierung durchgeführt wird. Die so erhaltenen Polymerdispersionen enthalten vorzugweise weniger als 1500 ppm, insbesondere weniger als 1000 ppm und besonders bevorzugt weniger als 500 ppm flüchtige organische Anteile TVOC. Unter TVOC (Total Volatile Organic Compounds) werden alle organischen Verbindungen mit einem Siedepunkt von maximal 250°C bei 1 Bar verstanden. Die Bestimmung des restflüchtigen Gehalts erfolgt typischerweise nach DIN55649.

Es hat sich weiterhin als vorteilhaft erwiesen, wenn man die wässrige Polymerdispersion nach ihrer Herstellung durch Zugabe einer anionischen oberflächenaktiven Substanz stabilisiert. Hierfür bevorzugt sind die Dialkylester der Sulfobernsteinsäure bzw. ihrer Salze, insbesondere der Natriumsalze, insbesondere die Dialkylester der Sulfobernsteinsäure mit 6 bis 12 C-Atomen je Alkylrest. Typischerweise versetzt man die wässrige Polymerdispersion im Anschluss an die Emulsionspolymerisation mit 0,05 bis 2 Gew.-% und insbesondere mit 0,1 bis 1 Gew.-% einer derartigen anionischen oberflächenaktiven Substanz.

In der Regel wird man die wässrige Polymerdispersion außerdem mit einem Biozid stabilisieren.

Der Feststoffgehalt der erfindungsgemäß verwendeten wässrigen Polymerdispersionen beträgt üblicherweise von 30 bis 80 Gew.-%, vorzugsweise 40 bis 75 Gew.-% und speziell von 45 bis 75 Gew.-%.

Die in den erfindungsgemäß verwendeten wässrigen Polymerdispersionen vorliegenden Polymerpartikel haben in der Regel eine gewichtsmittlere Teilchengröße von 0,05 bis 1 µm, vorzugsweise von 0,1 bis 0,8 µm und insbesondere von 0,1 bis 0,6 µm. Die Partikel können sowohl eine monomodale Teilchengrößenverteilung, also eine Gauß'-sche Verteilung mit nur einem Maximum, oder eine polymodale Verteilung mit wenigstens zwei ausgeprägten Maxima, die sich in der Regel um wenigstens 0,05 µm unterscheiden, aufweisen.

Zur Herstellung der von Polymerdispersionen mit polymodaler Verteilung kann auf entsprechende aus dem Stand der Technik bekannte Verfahren zurückgegriffen werden. Beispielsweise kann man das zuvor beschriebene Verfahren einer radikalischen, wässrigen Emulsionspolymerisation in der Weise abwandeln, dass man im Verlauf der Polymerisation, nachdem bereits ein Teil der Monomere polymerisiert ist, eine größere Emulatormenge zusetzt, welche die Bildung einer neuen Teilchengeneration initiiert. Ein solches Verfahren ist beispielsweise aus EP 8775 bekannt. Alternativ kann man auch so vorgehen, dass zu Beginn der radikalischen, wässrigen Emulsionspolymerisation zunächst ein teilchenförmiges Saatpolymer 1 vorlegt wird und dann im Verlauf der Polymerisation wenigstens ein weiteres Saatpolymer 2 in Form einer wässrigen Dispersion zugegeben wird.

Die in den erfindungsgemäß verwendeten Polymere (P), die üblicherweise in Dispersion oder als Pulver vorliegen, weisen bevorzugt ein gewichtsmittleres Molekulargewicht M_{w} im Bereich von etwa 10.000 bis 20.000.000 und bevorzugt im Bereich von etwa 50.000 bis 10.000.000 auf. Die Molmassenbestimmung kann dabei durch Gelpermeationschromatographie mit einem Standard, wie Polymethylmethacrylat, erfolgen.

Die Glasübergangstemperatur T_{g} des Polymers (P) hängt von der gewünschten Applikation ab und liegt in der Regel im Bereich von -60°C bis 60°C, vorzugsweise im Bereich von -50°C bis 50°C und besonders bevorzugt im Bereich von -40°C bis 50°C.

Die zuvor beschriebenen wässrigen Polymerdispersionen eignen sich in besonderer Weise als Bindemittelkomponente in den erfindungsgemäßen Bindemittelzusammensetzungen.

Neben einem Polymer (P) in Form einer wässrigen Dispersion oder eines Pulvers enthält die erfindungsgemäße Bindemittelzusammensetzung zusätzlich Borsäure und/oder wenigstens ein Salz der Borsäure.

Im Rahmen dieser Erfindung bevorzugte Borsäuresalze sind Salze der Monoborsäure und oligomerer Borsäure mit bis zu 20 Boratomen, wie Beispielsweise die Salze der Diborsäure, Triborsäure, Tetraborsäure, Pentaborsäure, Hexaborsäure, Dekaborsäure oder der Dodekaborsäure. Bevorzugt sind die Alkalimetallsalze, insbesondere die Nariumsalze. Gleichermaßen bevorzugt sind die Ammoniumsalze, Alkylammoniuminsalze und Hydroxyalkylammoniumsalze, wie zuvor definiert, wobei die Alkylreste in den Alkylammoniumsalzen und den Hydroxyalkylammoniunsalzen vorzugsweise jeweils nicht mehr als 8 und insbesondere nicht mehr als 4 C-Atome aufweisen. Bevorzug sind solche Alkylammoniumsalze und Hydroxyalkylammoniumsalze, die insgesamt nicht mehr als 10 und speziell nicht mehr als 8 C-Atome aufweisen. Beispiele für Borsäuresalze sind insbesondere Na₃BO₃, Na₂HBO₃, Na₄B₂O₅, Boracit (Mg₃[Cl|BO₃|B₆O₁₀]) und Borax (Na₂[B₄O₅(OH)₄] · 8 H₂O).

Die in den Bindemittelzusammensetzungen der Erfindung enthaltende Menge an Borsäure und/ oder Borat beträgt in der Regel 0,05 bis 15 Gew.-%, vorzugsweise 0,1 bis 10 Gew.-% und speziell 0,1 bis 5 Gew.-% bezüglich des Polymers (P).

Für die vorteilhafte Wirkung der Borsäure und/ oder des Borats ist der pH-Wert der erfindungsgemäßen Bindemittelzusammensetzung unkritisch. In der Regel liegt der pH-Wert aber im Bereich von 2 bis 10.

Die Borsäure und/ oder die Borate können vor, während oder im Anschluss an die Polymerisation des Polymers (P) zugesetzt werden. Alternativ können sie auch bei der Herstellung der Bindemittelzusammensetzung zugegeben werden.

Zur Herstellung einer wässrigen Bindemittelzusammensetzung wird die Borsäure und/oder die Borate vorzugsweise einer Polymerdispersion des Polymers (P) in fester Form, in Form einer Dispersion oder einer Lösung zugesetzt und gleichmäßig darin verteilt. Typischerweise erfolgt die Zugabe dabei in fester Form oder als wässrige Lösung. Eine feste Bindemittelzusammensetzung wird vorzugsweise durch Trocknung einer wässrigen Bindemittelzusammensetzung gewonnen. Gemäß einer weiteren bevorzugten Vorgehensweise wird sie durch Vermischen eines Polymers (P) in Pulverform mit Borsäure und/ oder die Borate hergestellt.

Borsäure und Borate verleihen dem erfindungsgemäßen Bindemittelzusammensetzungen für verschieden Anwendungsgebiete vorteilhafte Eigenschaften. Beispielsweise verbessern die Bindemittelzusammensetzungen, wie im Folgenden näher beschrieben, als Bestandteil von Korrosionsschutzanstrichen deren antitkorrosive Wirkung und als Bestandteil von Klebstoffformulierungen deren Adhäsions- und Kohäsionseigenschaften.

Wie die vorteilhaften Wirkungen der Borsäure und der Borate auf molekularer Ebene erklärt werden können ist für die Erfindung von nachrangiger Bedeutung. Gleichwohl wird vermutet, dass Borsäure und Borate nicht-kovalente Wechselwirkungen mit funktionellen Gruppen des Polymers (P), insbesondere mit Carboxyl-, Carbonsäureamid - und Hydroxylgruppen, eingehen. Die Wechselwirkungen beruhen vermutlich vornehmlich auf Wasserstoffbrückenbindungen und ionischen Bindungen. Ein Borsäure- bzw. Boratmolekül kann demnach mit zwei oder mehreren funktionellen Gruppen des Polymers (P) interagieren und somit eine vernetzende Wirkung entfalten. Es wird weiter vermutet, dass die erwähnten vorteilhaften Eigenschaften der erfindungsgemäßen Bindemittelzusammensetzungen sowie der daraus erhältlichen Beschichtungsfilme auf die genannten nicht-kovalenten und im gewissen Umfang reversiblen Wechselwirkungen zurückzuführen sind. So ist beispielsweise vorstellbar, dass die hohe Härte bei gleichzeitiger hoher Flexibilität der aus der erfindungsgemäßen Anstrichmittel gebildeten Beschichtungsfilme auf der reversiblen Verteilung der durch Borsäure oder Borate erzeugten Vernetzungspunkte im Polymer (P) beruht. Dabei verliehen Borsäure und Borate dem Film einerseits aufgrund der Vernetzung eine vorteilhafte Härte und anderseits, aufgrund der der Fähigkeit Bindungen an einer Stelle des Polymers zu lösen und an anderer Stelle neu zu knüpfen, hohe Flexibilität und geringe Bruchanfälligkeit.

Die anwendungstechnischen Eigenschaften von auf den erfindungsgemäßen Bindemittelzusammensetzungen basierenden Beschichtungsfilmen lassen sich durch Variation der Menge an Borsäure und/ oder Borat modifizieren. Beispielsweise kann durch Optimieren der Boratmenge eine spezifische Eigenschaft von Anstrichmitteln, wie etwa die Haftung des Anstrichs auf dem Untergrund, maximiert werden, oder eine Gewichtung verschiedener Eigenschaften, wie etwa Adhäsion und Kohäsion eines Klebstoffs, den Anforderungen entsprechend vorgenommen werden.

Die erfindungsgemäßen Bindemittelzusammensetzungen eignen sich für eine Vielzahl von Anwendungen in denen man üblicherweise wässrige Polymerdispersionen als Bindemittel verwendet, z.B. in Anstrichfarben, in Papierstreichmassen, in Beschichtungssystemen für Leder und für mineralische Formkörper, in Primem zur Beschichtung von Metallen, als Bindemittel bei der Vliesstoffherstellung, als Klebrohstoffe, als Additive für hydraulisch bindende Massen wie Gips oder Beton, als Additive für Ton- oder Lehmbaustoffe, zur Herstellung von Membranen und dergleichen.

Die erfindungsgemäßen Bindemittelzusammensetzungen, insbesondere die wässrigen, kommen vorzugsweise in wässrigen Anstrichmitteln zum Einsatz. Dementsprechend betrifft ein weiterer Gegenstand der vorliegenden Erfindung die Verwendung der hier beschriebenen Bindemittelzusammensetzungen in Anstrichmittelformulierungen.

Die in den Anstrichmitteln zum Einsatz kommenden Bindemittelzusammensetzungen enthalten Polymere (P), deren Glasübergangstemperaturen T_{g} typischerweise im Bereich von 0°C bis 50°C, vorzugsweise im Bereich von 5°C bis 45°C und insbesondere im Bereich von 5°C bis 40°C liegt.

Die Anstrichmittelformulierungen können neben den Bindemittelzusammensetzungen weitere Zusatzstoffe enthalten, wie sie in Anstrichmitteln auf Basis wässriger Polymerdispersionen üblich sind. Hierzu zählen Pigmente, Füllstoffe, weitere Hilfsmittel und gegebenenfalls zusätzliche filmbildende Polymere.

Geeignete Pigmente sind beispielsweise anorganische Weißpigmente wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) oder farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten. Geeignet sind auch synthetische Weißpigmente mit Lufteinschlüssen zur Erhöhung der Lichtstreuung, wie die Rhopaque®-Dispersionen.

Geeignete Füllstoffe sind z. B. Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. In Anstrichmitteln werden naturgemäß feinteilige Füllstoffe bevorzugt. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Glänzende Anstrichmittel weisen in der Regel nur geringe Mengen sehr feinteiliger Füllstoffe auf oder enthalten keine Füllstoffe.

Feinteilige Füllstoffe können auch zur Erhöhung der Deckkraft und/oder zur Einsparung von Weißpigmenten eingesetzt werden. Zur Einstellung der Deckkraft des Farbtons und der Farbtiefe werden vorzugsweise Abmischungen aus Farbpigmenten und Füllstoffen eingesetzt.

Zu den üblichen Hilfsmitteln zählen, neben den bei der Polymerisation eingesetzten Emulgatoren, auch Netz- oder Dispergiermittel, wie Natrium-, Kalium- oder Ammoniumpolyphosphate, Alkalimetall- und Ammoniumsalze von Acrylsäure- oder Maleinsäureanhydridcopolymeren, Polyphosphonate, wie 1-Hydroxyethan-1,1-diphosphonsaures Natrium sowie Naphthalinsulfonsäuresalze, insbesondere deren Natriumsalze.

Weitere geeignete Hilfsmittel sind Verlaufsmittel, Entschäumer, Biozide und Verdicker. Geeignete Verdicker sind z. B. Assoziativverdicker, wie Polyurethanverdicker. Die Menge des Verdickers beträgt vorzugsweise weniger als 1 Gew.-%, besonders bevorzugt weniger als 0,6 Gew.-%, bezogen auf den Feststoffgehalt des Anstrichmittels.

Der Anteil der Pigmente kann durch die Pigmentvolumenkonzentration (PVK) beschrieben werden. Die PVK beschreibt das Verhältnis des Volumens an Pigmenten (V_{P}) und Füllstoffen (V_{F}) zum Gesamtvolumen, bestehend aus den Volumina an Bindemittel (V_{B}), Pigmenten und Füllstoffen eines getrockneten Beschichtungsfilms in Prozent: PVK = (V_{P} + V_{F}) x 100 / (V_{P} + V_{F} + V_{B}) (vgl. Ullmann's Enzyklopädie der technischen Chemie, 4. Auflage, Band 15, S. 667). Anstrichmittel lassen sich anhand der PVK beispielsweise wie folgt einteilen:

| | |
|---|---|
| hochgefüllte Innenfarbe, waschbeständig, weiß/matt | ca. ≥ 85 |
| Innenfarbe, scheuerbeständig, weiß/matt | ca. 60-85 |
| Halbglanzfarbe, seidenmatt | ca. 30-60 |
| Halbglanzfarbe, seidenglänzend | ca. 25-35 |
| Hochglanzfarbe | ca. 15-25 |
| Außenfassadenfarbe, weiß | ca. 45-55 |
| Klarlack | 0 |

Die erfindungsgemäßen Anstrichmittel können beispielsweise in Form eines unpigmentierten Systems (Klarlacks) oder eines pigmentierten Systems vorliegen.

Ein Gegenstand der Erfindung betrifft ein Anstrichmittel in Form einer wässrigen Zusammensetzung, enthaltend:
- wenigstens eine erfindungsgemäße Bindemittelzusammensetzung,
- wenigstens einen anorganischen Füllstoff und/oder wenigstens ein anorganisches Pigment,
- wenigstens ein übliches Hilfsmittel, und
- Wasser.

Bevorzugt ist ein Anstrichmittel, enthaltend:
- 10 bis 60 Gew.-% wenigstens eine erfindungsgemäße Bindemittelzusammensetzung,
- 10 bis 70 Gew.-% anorganische Füllstoffe und/oder anorganische Pigmente,
- 0,1 bis 20 Gew.-% übliche Hilfsmittel, und
- Wasser ad 100 Gew.-%.

Eine Ausführungsform der vorliegenden Erfindung sind Anstrichmittel in Form einer Dispersionsfarbe. Dispersionsfarben enthalten in der Regel 30 bis 75 Gew.-% und vorzugsweise 40 bis 65 Gew.-% nichtflüchtige Bestandteile. Hierunter sind alle Bestandteile der Zubereitung zu verstehen, die nicht Wasser sind, zumindest aber das Gesamtgewicht an Bindemittel, Füllstoff, Pigment, schwerflüchtigen Lösungsmitteln (Siedepunkt oberhalb 220 °C), z. B. Weichmacher, und polymere Hilfsmittel. Davon entfallen etwa
a) 3 bis 90 Gew.-%, insbesondere 10 bis 60 Gew.-%, auf die erfindungsgemäße Polymerdispersion (PD),
b) 0 bis 85 Gew.-%, bevorzugt 5 bis 60 Gew.-%, insbesondere 10 bis 50 Gew.-%, auf wenigstens ein anorganisches Pigment,
c) 0 bis 85 Gew.-%, insbesondere 5 bis 60 Gew.-%, auf anorganische Füllstoffe und
d) 0,1 bis 40 Gew.-%, insbesondere 0,5 bis 20 Gew.-%, auf übliche Hilfsmittel.

Die erfindungsgemäßen Bindemittelzusammensetzungen eignen sich insbesondere zur Herstellung von Fassadenfarben mit einer PVK im Bereich von 30 bis 65 oder Innenfarben mit einer PVK im Bereich von 65 bis 80. Des Weiteren sind Sie besonders geeignet zur Herstellung von Seidenglanz- oder einer Hochglanzfarben, die z. B. eine PVK im Bereich von 12 bis 35 %, vorzugsweise 15 bis 30 % haben.

Die Herstellung der erfindungsgemäßen Anstrichmittel erfolgt in bekannter Weise durch Abmischen der Komponenten in hierfür üblichen Mischvorrichtungen. Es hat sich bewährt, aus den Pigmenten, Wasser und gegebenenfalls den Hilfsmitteln eine wässrige Paste oder Dispersion zu bereiten, und anschließend erst das polymere Bindemittel, d. h. in der Regel die wässrige Dispersion des Polymeren mit der Pigmentpaste bzw. Pigmentdispersion zu vermischen.

Das erfindungsgemäße Anstrichmittel kann in üblicher Weise auf Substrate aufgebracht werden, z. B. durch Streichen, Spritzen, Tauchen, Rollen, Rakeln etc.

Das erfindungsgemäße Anstrichmittel wird vorzugsweise als Bautenanstrichmittel, d. h. zum Beschichten von Gebäuden oder Gebäudeteilen verwendet. Es kann sich dabei um mineralische Untergründe wie Putze, Gips- oder Gipskartonplatten, Mauerwerk oder Beton, um Holz, Holzwerkstoffe, Metall oder Papier, z. B. Tapeten oder Kunststoff, z. B. PVC, handeln.

Bevorzugt ist der Einsatz der erfindungsgemäßen Anstrichmittel zur Beschichtung von Gebäudeinnenteilen, z. B. Innenwänden, Innentüren, Vertäfelungen, Treppengeländer, Möbel etc. Verwendung.

Ebenfalls bevorzugt ist die Verwendung der erfindungsgemäßen Bindemittelzusammensetzungen zur Formulierung von antikorrosiven Anstrichmitteln, aus denen Anstriche mit verbessertem Korrosionsschutz hergestellt werden können. Die antikorrosiven Anstrichmittel eignen sich als korrosionsinhibierende Grundierungen (Primer). Alternativ lassen sie sich mit ihnen durch Applikation direkt auf die Metalloberfläche ("direct-to-metal"- oder DTM-Anwendungen), also ohne vorheriges Aufbringen eines Primers, Anstriche mit guter Haftung und hoher antikorrosiver Wirkung erzielen.

Die erfindungsgemäßen Anstrichmittel zeichnen sich durch einfache Handhabung, gute Verarbeitungseigenschaften und hohes Deckvermögen aus. Die Anstrichmittel sind zudem schadstoffarm. Sie haben gute anwendungstechnische Eigenschaften, z. B. eine gute Wasserfestigkeit, gute Nasshaftung, gute Blockfestigkeit, eine gute Überstreichbarkeit und sie zeigen beim Auftragen einen guten Verlauf. Die Anstrichmittel sind auch bestens zur Herstellung antikorrosiver Beschichtungen geeignet.

Die aus den erfindungsgemäßen Anstrichmitteln hergestellten Anstriche zeichnen sich durch gute Haftung bei gleichzeitiger guter Scheuerfestigkeit aus. Die besagten Anstriche weisen zudem im Allgemeinen eine hohe Flexibilität und eine geringe Brüchigkeit auf, die es ihnen z. B. ermöglicht, sich einem arbeitenden Untergrund anzupassen.

Des Weiteren kommen die erfindungsgemäßen Bindemittelzusammensetzungen vorzugsweise in Klebstoffen zum Einsatz. Dementsprechend betrifft ein weiterer Gegenstand der vorliegenden Erfindung die Verwendung der hier beschriebenen Bindemittelzusammensetzungen in Klebstoffformulierungen.

Die Klebstoffformulierungen werden vorzugsweise mit wässrigen Bindemittelzusammensetzungen hergestellt und können alleinig aus diesen bestehen. Die Klebstoffformulierungen können jedoch neben den wässrigen Bindemittelzusammensetzungen auch weitere Zusatzstoffe enthalten, wie sie in Klebstoffen auf Basis wässriger Polymerdispersionen üblich sind. Hierzu zählen Füllstoffe, Farbstoffe, einschließlich Pigmenten, Verlaufsmittel, Verdicker, Biozide und gegegebenenfalls weitere Hilfsmittel. Beispiele für solche Zusatzstoffe wurden zuvor bereits genannt. Weitere für die Klebstoffformulierungen geeignete Additive sind beispielsweise Abbindeverzögerer, wie etwa Natriumgluconat, sowie Tackyfier (klebrig machende Harze). Die Klebstoffformulierungen können darüber hinaus zusätzliche, anwendungsspezifische Additive enthalten, wie beispielsweise Zement in Klebstoffen für Fliesen und ähnliche Boden- und Wandbeläge.

Tackifier sind z. B. Naturharze, wie Kolophoniumharze und daraus durch Disproportionierung, Isomerisierung, Polymerisation, Dimerisation oder Hydrierung hergestellten Derivate. Diese können in ihrer Salzform (mit z. B. ein- oder mehrwertigen Gegenionen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit. Des Weiteren finden als Tackifier auch Kohlenwasserstoffharze, z. B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, α-Methylstyrol und Vinyltoluol Verwendung. Als Tackifier können auch Polyacrylate, welche ein geringes Molgewicht aufweisen, verwendet werden. Vorzugsweise haben diese Polyacrylate ein gewichtsmittleres Molekulargewicht M_{w} unter 30000. Die Polyacrylate bestehen bevorzugt zu mindestens 60, insbesondere mindestens 80 Gew.-% aus C₁-C₈ Alkyl(meth)acrylaten. Bevorzugte Tackifier sind natürliche oder chemisch modifizierte Kolophoniumharze. Kolophoniumharze bestehen zum überwiegenden Teil aus Abietinsäure oder Abietinsäurederivaten. Die Gewichtsmenge der Tackifier beträgt vorzugsweise 0 bis 100 Gew.-Teile. besonders bevorzugt 0 bis 50 Gew.-Teile. bezogen auf 100 Gew.-Teile Polymer (fest/fest).

Die erfindungsgemäßen Klebstoffe können einen oder mehrere Tackifier enthalten oder frei von Tackifier sein. Falls ihnen Tackifier zugesetzt sind, ersetzen diese in der Regel einen Teil des Polymers (P).

Die für die erfindungsgemäßen Klebstoffformulierungen verwendeten wässrigen Polymerdispersionen weisen in der Regel einem Feststoffgehalt von 45 bis 80 Gew.-%, vorzugsweise von 50 bis 75 Gew.-% und insbesondere von 55 bis 72 Gew.-% auf.

Ein Gegenstand der Erfindung betrifft einen Klebstoff in Form einer wässrigen Zusammensetzung, enthaltend:
- 20 bis 70 Gew.-% wenigstens eine Bindemittelzusammensetzung der Erfindung,
- 0 bis 60 Gew.-% wenigstens einen anorganischen Füllstoff und/oder wenigstens ein anorganisches Pigment,
- 0 bis 30 Gew.-% wenigstens ein weiteres Hilfsmittel, und
- Wasser ad 100 Gew.-%.

Die erfindungsgemäßen Bindemittelzusammensetzungen und Klebstoffe eignen sich grundsätzlich für die Herstellung von Klebstoffbeschichtungen auf beliebigen Substraten wie Papiere, Kunststoffe, z. B. PVC, mineralischen Untergründen wie Putze, Gips - oder Gipskartonplatten, Mauerwerk oder Beton, Holz, Holzwerkstoffe oder Metall.

Die Stärke der Haftklebstoffbeschichtung hängt vom gewünschten Anwendungszweck ab und liegt typischerweise im Bereich von 1 bis 500 µm, insbesondere im Bereich von 2 bis 250 µm oder 5 bis 200 µm, entsprechend einer Beschichtung von 1 bis 500 g/m², insbesondere 2 bis 250 g/m² und speziell 5 bis 200 g/m².

Die Bindemittelzusammensetzungen bzw. Klebstoffe können mittels üblicher Methoden, z. B. durch Rollen, Rakeln, Streichen, Gießen etc. auf die zu beschichteten Substrate aufgebracht werden. Es ist auch möglich die Polymerdispersionen bzw. Haftklebstoffe zunächst auch auf eine Release-Folie, z.B. ein Release-Papier, aufzubringen und mit diesem die Haftklebstoffschicht auf das gewünschte Substrat zu übertragen. Das in den Zusammensetzungen enthaltene Wasser wird typischerweise in üblicher Weise entfernt, z.B. durch Trocknen bei Temperaturen im Bereich von 10 bis 150°C, insbesondere im Bereich von 15 bis 100°C.

Die erfindungsgemäßen Bindemittelzusammensetzungen und Klebstoffe eignen sich insbesondere zur Verklebung von flexiblen Fußbodenbelägen, wie etwa textilen Bodenbelägen, z. B. Teppichböden, Linoleum-, Gummi-, Polyolefin-, CV- und PVC-Belägen, als auch starren Fußbodenbelägen, wie etwa Parkett und Fliesen. Sie werden daher bevorzugt zum Verkleben dieser Fußbodenbeläge auf insbesondere den oben erwähnten mineralischen Unterlagen oder Unterlagen aus Holz oder Holzwerkstoffen, eingesetzt.

Die Glasübergangstemperaturen T_{g} der für die erfindungsgemäßen Fußbodenklebstoffe verwendeten Polymere (P) ist im Falle der Klebstoffe für flexible Beläge typischerweise < -5°C, vorzugsweise < -10°C und insbesondere < -15°C, sowie im Falle der Klebstoffe für starre Beläge, insbesondere Parkett, typischerweise < 20°C, vorzugsweise < 15°C und insbesondere < 10°C.

Die erfindungsgemäßen Klebstoffe haben sehr gute Klebeeigenschaften, insbesondere eine gute Adhäsion zu den zu verklebenden Substraten und eine hohe Kohäsion (innere Festigkeit in der Klebstoffschicht). Sie sind außerdem einfach zu handhaben und haben gute Verarbeitungseigenschaften. Hinsichtlich der Verklebung von flexiblen Fußbodenbelägen sind sie gegenüber Klebstoffen des Standes der Technik durch deutlich erhöhte Schälfestigkeit bei gleichbleibend guten weiteren Eigenschaften, insbesondere des Nassanfassvermögens und des Trockenanfassvermögens, ausgezeichnet. Hinsichtlich ihrer Verwendung als Klebstoff für starre Bodenbeläge, weisen erfindungsgemäßen Klebstoffe eine verbesserte Endfestigkeit auf.

Die erfindungsgemäße Verwendung von Borsäure und/ oder Borat zur externen Polymervernetzung ermöglicht es auch, die Klebstoffe der Erfindung als lagerstabile EinKomponenten-Formulierungen zu formulieren. Im Gegensatz dazu muss bei Klebstoffen des Standes der Technik der kovalente Bindungen ausbildende Vernetzer in einer zweiten, separaten Komponente gelagert werden, da er ansonsten zum vorzeitigen irreversiblen Aushärten führen würde.

Für bestimmte Anwendungsfelder ist es vorteilhaft anstelle der erfindungsgemäßen wässrigen Bindemittelzusammensetzung eine feste pulverförmige Bindemittelzusammensetzung zu verwenden, die ein wasserunlösliches Polymer (P), wie hier definiert und Borsäure oder ein Salz der Borsäure enthalten. Derartige Pulver können beispielsweise hergestellt werden, indem Wasser und gegebenenfalls weitere flüchtige Komponenten aus der wässrigen Bindemittelzusammensetzung, vorzugsweise durch ein konventionelles Trocknungsverfahren zur Pulverherstellung, insbesondere durch ein Sprühtrocknungsverfahren, entfernt werden. Alternativ kann man eine wässrige Dispersion des Polymeren durch ein geeignetes Trocknungsverfahren zunächst in ein Pulver überführen und während oder im Anschluss an das Trocknungsverfahren das Pulver mit der gewünschten Menge an Borsäure oder einem Salz davon versetzen. Diese festen pulverförmigen Bindemittelzusammensetzungen kommen beispielsweise in Zementen zum Einsatz, denen sie vorteilhafte Materialeigenschaften, insbesondere verbesserte Festigkeit, wie Zug- und Reißfestigkeit, verleihen.

Die folgenden Beispiele dienen der Veranschaulichung der Erfindung.

### Beispiele

Die Bestimmung der lichtdurchlässigkeit (LD-Wert) erfolgte photometrisch mit einem Photometer an 0,01 gew.-%igen Verdünnung der Dispersion bei 23°C.

Die Bestimmung der mittleren Teilchendurchmesser erfolgte nach der von H. Cölfen, "Analytical Ultracentrifugation of Nanoparticles" in Encyclopedia of Nanoscience and Nanotechnology, (American Scientific Publishers, 2004), S. 67-88 beschriebenen Methode bei 23°C an einer 0,1-0,5 gew.-%igen Verdünnung (bez. auf Feststoffgehalt, Lichtdurchlässigkeit etwa 10 %) der Polymerdispersion mittels Ultrazentrifuge (Typ Beckmann Model XL) in einer Sedimentationsfeldrampe von 600 bis 40000 U/min entsprechend einer Beschleunigung von 2250 bis 150000 g unter Verwendung einer Trübungsoptik (siehe auch W. Mächtle und L. Börger in "Analytical Ultracentrifugation of Polymers and Nanoparticles", (Springer, Berlin, 2006), W. Mächtle in Anatytical Ultracentrifugation in Biochemistry and Polymer Science: S.E. Härting et al. (Herausgeber), Cambridge: Royal Society of Chemistry, 1992, S. 147-175 bzw. in W. Mächtle, Makromolekulare Chemie 185 (1984), Seite 1025 - 1039). Als Verdünnungsmittel diente D₂0 mit ca. 0,1 bis 0,5 g/l, z. B. 0,5 g/l Emulgator K30 (Natriumsalz eines Alkansulfonats).

Die Bestimmung der mittleren Teilchendurchmesser wurde auch mittels Hydrodynamischer Chromatographie (HDC) unter Verwendung eines Particle Size Distribution Analyser (PSDA, Varian Deutschland GmbH) mit einer Cartridge vom Typ Nr.2 (Standard) bei einer Wellenlänge von 254 nm vorgenommen. Die Temperatur betrug 23 °C und die Messzeit 480 Sekunden.

Die Bestimmung der Viskosität nach Brookfield erfolgte in Anlehnung an DIN EN ISO 3219 mittels eines Rotationsviskosimeters (Rheometer Physica MCR 301 mit Probenwechsler und Meßsystem CC27 der Fa, Anton Paar) bei 23° und einem Schergefälle von 0 bis 500 sec⁻¹). Angegeben ist der Wert bei 100 sec⁻¹.

Die Dynamisch-Mechanische Analyse (DMA) wurden mit einem Rheometrics Solids Analyzer RSA II in einem Messtemperaturbereich von -30 °C bis +200 °C; einer Heizrate von 2 °C/min und einer Frequenz f von 1 Hz vorgenommen. Für die zu vermessenden Dispersionsfilme wurden die Speichermodule E', die Verlustmodule E" und tan δ bestimmt (Probengeometrie: 34,5 mm Länge, 6,0 mm Breite, zwischen 0,645 und 0,975 mm Dicke). Die Messungen wurden graphisch durch Auftragen von E', E" und tan δ gegen die Temperatur dargestellt. Aus den E"-Graphen ließ sich die Glasübergangstemperatur bestimmten.

Die Bestimmung der Glasübergangstemperatur erfolgte mittels DMA oder nach der in ASTM 3418/82 beschriebenen Methode mittels DSC unter Ermittlung der sog. Midpoint Temperature.

### I Herstellung der Polymerdispersionen

### Einsatzstoffe:

- Biozidlösung 1: Acticid MBS (Thor GmbH);
- Biozidlösung 2: Acticid MV (Thor GmbH);
- Emulgatorlösung 1: Dowfax® 2A1 (Dow Chemicals): Alkyldiphenyloxiddisulfonat, 45 gew.-%ige Lösung;
- Emulgatorlösung 2: C₁₃-Oxoalkoholpolyethoxylat mit 8 Ethylenoxid(EO)-Einheiten);
- Emulgatorlösung 3: Natriumsalz von Fettalkoholpolyethylenglykolethersulfat, 32-34 gew.-%ige Lösung;
- Emulgatorlösung 4: Natriumsalz des Laurylethersulfats, 27 gew.-%ige Lösung.

### Herstellungsbeispiel 1: Polymerdispersion D1

In einem mit Dosiervorrichtung, Rührwerk und Temperaturregelung ausgerüsteten 2 Liter-Polymerisationsgefäß wurden 178,54 g vollentsalztes Wasser (im Folgenden VE-Wasser) und 6,36 g Polystyrolsaatlatex (mit gewichtsmittlerer Teilchengröße von 30 nm) vorgelegt. Dann erhitzte man die Vorlage unter Rühren auf 95 °C und gab unter Aufrechterhaltung dieser Temperatur zunächst 3,25 g des Zulaufs 2 zu und dosierte danach Zulauf 1 und den Rest von Zulauf 2 parallel innerhalb von 2,75 Stunden mit gleichbleibender Zulaufrate zu. Nach Beendigung der Zuläufe rührte man das Polymerisationsgemisch weitere 15 Minuten, gab dann 2,40 g einer 25 gew.-%igen wässrigen Ammoniak-Lösung und 7,00 g VE-Wasser zu und rührte weitere 5 Minuten. Anschließend gab man 3,60 g einer 10 gew.-%igen wässrigen tert.-Butylhydroperoxid Lösung und 12,40 g VE-Wasser sowie 4,58 g einer 13,1 gew.-%igen wässrigen Acetonbisulfit-Lösung und 11,42 g VE-Wasser innerhalb von 1 Stunde zu. Man rührte das Polymerisationsgemisch weitere 15 Minuten und kühlte anschließend auf 30 °C ab. Dann gab man eine Mischung aus 3,90 g der Biozidlösung 1 und 1,04 g der Biozidlösung 2 und danach 7,80 g 10 gew.-%iger Natronlauge unter Rühren zu und kühlte das Polymerisationsgemisch auf Raumtemperatur ab.

### Zulauf 1:

| | |
|---|---|
| 256,35 g | VE-Wasser |
| 8,00 g | Emulgatorlösung 1 |
| 24,00 | Emulgatorlösung 2 |
| 7,80 g | Acrylsäure |
| 18,00 g | 50 gew.-%ige wässrige Lösung von Acrylamid |
| 336,00 g | n-Butylacrylat |
| 247,20 g | Methylmethacrylat |

### Zulauf 2:

| | |
|---|---|
| 41,63 | VE-Wasser |
| 0.72 g | Natriumperoxodisulfat |

Die erhaltene Dispersion hatte einen Feststoffgehalt von 51,1 %, einen pH-Wert von 7,8 und eine Glasübergangstemperatur Tg von 8 °C. Der mittlere Teilchendurchmesser (Volumenmittel) betrug 209 nm, die Lichtdurchlässigkeit 68% und die Viskosität 205 mPas.

### Herstellungsbeispiel 2: Polymerdispersion D2

In einem mit Dosiervorrichtung, Rührwerk und Temperaturregelung ausgerüsteten Polymerisationsgefäß wurden 504,00 g VE-Wasser und 22,80 g Emulgatorlösung 3 vorgelegt. Dann spülte man die Apparatur mit Stickstoff und erhitzte die Vorlage unter Rühren auf 85 °C. Unter Aufrechterhaltung dieser Temperatur gab man 65,15 g des Zulaufs 1 und 4,63 g des Zulaufs 3 zu und ließ 10 Minuten rühren. Dann dosierte man den Rest von Zulauf 1 innerhalb von 105 Minuten und parallel dazu den Rest von Zulauf 3 innerhalb von 183 Minuten mit gleichbleibender Zulaufrate zu. Im Anschluss an Zulauf 1 wurde Zulauf 2 innerhalb von 60 Minuten mit gleichbleibender Zulaufrate zugefahren. Nach Beendigung des Zulaufs 3 rührte man das Polymerisationsgemisch weitere 15 Minuten, gab dann 2,40 g einer 25 gew.-%igen wässrigen Ammoniak-Lösung und 18,00 g VE-Wasser zu und ließ unter Rühren auf 65 °C abkühlen. Anschließend dosierte man innerhalb von 60 Minunten 12,00 g einer 10 gew.-%igen wässrigen tert.-Butylhydroperoxid-Lösung und 9,60 g einer 10 gew.-%igen wässrigen Ascorbinsäure-Lösung zu und ließ dann 1,20 g einer 30 gew.-%igen wässrigen Wasserstoffperoxid-Lösung innerhalb von 10 Minuten zulaufen. Danach gab man 54,00 g VE-Wasser zu, dosierte 12,00 g einer 25 gew.-%igen wässrigen Ammoniak-Lösung innerhalb von 10 Minuten zu und kühlte ab. Beim Erreichen einer Temperatur von 35°C ließ man 8,00 g der Biozidlösung 2 zulaufen.

### Zulauf 1:

| | |
|---|---|
| 282,35 g | VE-Wasser |
| 44,80 g | Emulgatorlösung 3 |
| 16,29 g | Emulgatorlösung 4 |
| 22,44 g | Acrylsäure |
| 309,60 g | Ethylhexylacrylat |
| 410,40 g | Styrol |

### Zulauf 2:

| | |
|---|---|
| 177,60 g | VE-Wasser |
| 18,00 g | Emulgatorlösung 3 |
| 10,29 g | Emulgatorlösung 4 |
| 7,44 g | Acrylsäure |
| 176,40 g | Ethylhexylacrylat |
| 180,00 g | Styrol |
| 93,60 g | Ureidomethacrylat |

### Zulauf 3:

| | |
|---|---|
| 3,60 g | Natriumperoxodisulfat |
| 47,83 g | VE-Wasser |

Die erhaltene Dispersion hatte einen Feststoffgehalt von 50,1 %, eine Glasübergangstemperatur von etwa 22 °C und einen pH-Wert von 7,4. Der mittlere Teilchendurchmesser (mittels HDC) betrug 97 nm, die Lichtdurchlässigkeit 83% und die Viskosität 697 mPa·s.

### Herstellungsbeispiel 3: Polymerdispersion D3

Die Polymerdispersion wurde analog zu dem zuvor in Herstellungsbeispiel 2 beschriebenen Verfahren hergestellt, mit dem Unterschied, dass Zulauf 1 zusätzlich 1,92 g tert.-Dodecylmercaptan und Zulauf 2 zusätzlich 0,48 g tert.-Dodecylmercaptan enthielten.

Die erhaltene Dispersion hatte einen Feststoffgehalt von 50,7%, eine Glasübergangstemperatur von etwa 22 **°C** und einen pH-Wert von 7,4. Der mittlere Teilchendurchmesser (mittels HDF) betrug 95 nm und die Lichtdurchlässigkeit 86%.

### Beispiel 1: Untersuchung der Vernetzung mittels Tetraborat

Zur Untersuchung des Einflusses von Borat auf die Filmeigenschaften von Polymerdispersionen wurden wässrige Bindemittelzusammensetzungen der Erfindung hergestellt, indem man der Polymerdispersion D1 verschiedene Mengen Natriumtetraborat zusetzte. Die aus diesen Mischungen erhaltenen Filme wurden mittels Dynamisch-Mechanischer Analyse (DMA) vermessen.

Durch Zugabe von 6 bis 10 gew.-%iger wässriger Boraxlösung wurden Proben der Polymerdispersion D1 mit Gehalten von 0,2 Gew.-%, 0,5 Gew.-% bzw. 1 Gew.-% Borax hergestellt. Die Dispersionsfilme dieser Proben sowie einer Probe ohne Borax wurden DMA-analytisch vermessen. Die ermittelten E'-Werte für ausgewählte Temperaturen sind in Tabelle 1 aufgelistet. Die anhand der E"-Graphen ermittelten Glasübergangstemperaturen sind ebenfalls in Tabelle 1 aufgeführt.

**Tabelle 1**

| | Speichermodul E' (x10⁵ Pa) | | | T_{g} (°C) |
|---|---|---|---|---|
| | 20 °C | 150 °C | 200 °C | |
| Vergleich (0 Gew.-% Borax) | 407 | 1,90 | 0,881 | 8 |
| 0,2 Gew.-% Borax | 541 | 2,29 | 1,45 | 8 |
| 0,5 Gew.-% Borax | 565 | 3,61 | 2,12 | 11 |
| 1,0 Gew.-% Borax | 542 | 5,54 | 3,26 | 11 |

Tabelle 1 und Abb. 1 ist zu entnehmen, dass der Boratzusatz bei 20 °C eine schwache Vernetzung bewirkte, die ab etwa 60 °C deutlicher und über 150 °C stark in Erscheinung trat. Mit steigendem Boratgehalt der Dispersion nahm die Vernetzung zu. Die Glasübergangstemperatur stieg im gemessen Bereich zunächst mit zunehmenden Boratgehalt etwas an und erreichte dann ein Plateau.

### II Anwendungsbeispiele

### A Korrosionsschutzbeschichtungsmittel

### Einsatzstoffe:

- Entschäumer A: Byk® 022 (Byk Chemie GmbH): basierend auf einer Mischung von Polysiloxanen und hydrophoben Feststoffen in Polyglykol;
- Emulgator A: Lutensit® A-EP (BASF SE): saurer Phosphorsäurehalbester alkoxylierter C₁₃- und C₁₅-Fettalkohle mit 18-20 Alkylenoxidgruppen (Verhältnis der Ethoxyl-und Propoxyl-Einheiten etwa 2:1);
- Rotpigment A: Bayferrox 130M (Lanxess GmbH): synthetisches Eisenoxid alpha-Fe203;
- Füllstoff A: Talkum 20M2 (Finntalc): Talkum;
- Füllstoff B: Lithopone 30% L (Sachtleben Chemie GmbH): basierend auf kopräzipitiertem Zinksulfid (ca. 30 Gew.-%) und Bariumsulfat (ca. 70 Gew.-%);
- Korrosionsinhibitor A: Heucophos® ZMP (Heubach GmbH): antikorrosives Pigment auf Grundlage eines basischen Zink-Molybdänorthophosphathydrats;
- Korrosionsinhibitor B: Korrosionsinhibitor L1 (C.H. Erbslöh KG): Formulierung auf Basis verschiedener korrosionsinhibierenden Komponenten wie Alkanolaminen, Boraten und Phosphaten;
- Korrosionsinhibitor C: Halox® Flash-X® 350 (C.H. Erbslöh KG): Organischer Flugrostinhibitor;
- Verdicker A: Collacral® PU85 (BASF SE): etwa 25 gew.-%ige Lösung eines Polyurethans in Wasser/ Butyldiglykol (4:1).

### Beispiel 2: Korrosionsschutzbeschichtungsmittel 1

Die erfindungsgemäßen Formulierungen KS 1 und KS 2 sowie die Vergleichsformulierungen KS V, KS D2 und KS D3 stellte man gemäß der in Tabelle 2 angegebenen Rezepturen her. Dazu wurde zunächst mit einem Dissolver (DISPERMAT®, VMA-Getzmann GmbH) die jeweilige Polymerdispersion in Gegenwart von Glaskugeln mit Entschäumer A vorgemischt. Zu dieser Mischung gab man eine Lösung von Emulgator A und Ammoniak in Wasser und anschließend ein Gemisch der restlichen Lösungsmittel. Die erhaltene Mischung ließ man zunächst einquellen und dispergierte sie dann nach Zugabe eines Gemisches aus Pigment und den Füllstoffen. Man gab danach Korrosionsinhibitor A, weiterem Entschäumer A und Korrosionsinhibitor B in Wasser zu und behandelte die Suspension auf der Rollbank. Schließlich wurden Verdicker A, Butylglykol und weiteres Wasser zugesetzt und die erhaltene Formulierung homogenisiert. Bei den hergestellten Formulierungen handelt es sich um typische Korrosionsschutzgrundierungen (Primer).

Zur Herstellung der erfindungsgemäßen Formulierungen KS 1 und KS 2 wurden die wässrigen Bindemittelzusammensetzungen WB 1 bzw. WB 2 verwendet:
- WB 1:: wurde durch Beimischen von 60,0 g Borsäure (5 pphm) zu der oben beschriebenen Polymerdispersion D3 hergestellt. Die erhaltene Dispersion hatte einen Feststoffgehalt von 48,9 % und einen pH-Wert von 7,6.
- WB 2:: wurde durch Beimischen von 84,0 g Dinatriumtetraborat (7 pphm) zu der oben beschriebenen Polymerdispersion D3 hergestellt. Die erhaltene Dispersion hatte einen Feststoffgehalt von 47,6 % und einen pH-Wert von 7,5.

Bei der Polymerdispersion V handelt es sich um eine anionisch stabilisierte, wässrige Dispersion eines Copolymers aus Methylmethacrylat, n-Butylacrylat, Acrylsäure (1,3 Gew.-%) und Acrylamid (1,5 Gew.-%) mit einer Glasübergangstemperatur von ca. 20°C.

**Tabelle 2: Beschichtungsmittelformulierungen; wenn nicht anders angegeben entsprechen die Zahlenwerte Gewichtsteilen.**

| Polymerdispersion / wässrige Bindemittelzusammensetzung | KS 2 | KS 1 | KS D3 | KS D2 | KS V |
|---|---|---|---|---|---|
| V | | | | | 335,88 |
| D2 | | | | 335,21 | |
| D3 | | | 331,24 | | |
| WB 1 | | 343,44 | | | |
| WB 2 | 352,82 | | | | |
| Entschäumer A | 1,32 | 1,32 | 1,32 | 1,32 | 1,32 |
| VE-Wasser | 35,16 | 35,16 | 35,16 | 35,16 | 35,16 |
| Emulgator A | 0,36 | 0,36 | 0,36 | 0,36 | 0,36 |
| Ammoniak, konz. | 6,60 | 6,60 | 6,60 | 6,60 | 6,60 |
| Phenoxypropanol | 4,32 | 4,32 | 4,32 | 4,32 | 4,32 |
| Benzin 180°-210°C | 4,32 | 4,32 | 4,32 | 4,32 | 4,32 |
| Rotpigment A | 51,0 | 51,0 | 51,0 | 51,0 | 51,0 |
| Füllstoff A | 21,60 | 21,60 | 21,60 | 21,60 | 21,60 |
| Füllstoff B | 76,68 | 76,68 | 76,68 | 76,68 | 76,68 |
| Korrosionsinhibitor A | 49,26 | 49,26 | 49,26 | 49,26 | 49,26 |
| Entschäumer A | 1,14 | 1,14 | 1,14 | 1,14 | 1,14 |
| Korrosionsinhibitor B/ VE-Wasser (1:1) | 2,22 | 2,22 | 2,22 | 2,22 | 2,22 |
| Verdicker A | 2,22 | 2,22 | 2,22 | 2,22 | 2,22 |
| Butylglykol | 7,92 | 7,92 | 7,92 | 7,92 | 7,92 |
| weiteres VE-Wasser | 55 | 55 | 65 | 80 | 35 |
| pH-Wert | 8,5 | 8,4 | 8,5 | 8,4 | 9,6 |
| Viskosität (ICI-Rotothinner (Kugel) bei RT) [mPa·s]* | 530 | 550 | 610 | 470 | 400 |
| Pigmentvolumenkonzentration (PVK) | 23% | 23% | 23% | 23% | 23% |

### Anwendungstechnische Prüfungen mittels Salzsprühtest:

Zunächst vermischte man die zu untersuchenden Beschichtungsformulierungen mit jeweils ca. 0,8 Gewichtsteilen einer 30 %-igen Lösung des Korrosionsinhibitors C in 15%igem Ammoniak. Die so erhaltenen Beschichtungsmittel wurden auf verzinkte Stahlbleche (ST 1405) gerakelt. Mit jedem Beschichtungsmittel wurden jeweils drei Platten beschichtet. Die beschichteten Bleche wurden 6 Tage bei Raumtemperatur und anschließend 1 Tag bei einer Temperatur von 50 °C gelagert. Die Trockenschichtdicke der Lacke betrug in allen Fällen über 60 µm. Jeweils 2 der 3 Probenplatten wurden mit einer Ritzspur bis zum Stahlsubstrat versehen, die im Abstand von 30 mm parallel zu einer der Längsseiten der Bleche verlief, die Ritzbreite betrug 0,5 mm. Die Belastung mit Salzsprühnebel erfolgte nach DIN EN ISO 7253 bei 35 °C mit einer 5 gew.-%igen NaCl-Lösung über einen Zeitraum von 696 Stunden. Im Anschluss wurden Veränderungen visuell bewertet:
- Unterwanderung des Lackfilms am Ritz.
- Blasenbildung sowohl am Ritz als auch in der Fläche nach DIN EN ISO 4628-2. Hier wurde die Anzahl der Blasen auf einer Skala von M 0 für keine Blasen bis M 5 für sehr viele Blasen bewertet, wobei M 1, M 2, M 3 und M4 entsprechende Abstufungen bezeichnen. Die Größe der Blasen wurde auf einer Skala von S 1 für sehr kleine Blasen bis S 5 für sehr große Blasen bewertet, wobei S 2, S 3 und S 4 entsprechende Abstufungen bezeichnen.
- Enthaftung des Lackes vom Substrat am Ritz.
- Unterrostung am Ritz.
- Haftfestigkeit: der Haftfestigkeitstest erfolgte durch eine Gitterschnittprüfung nach DIN EN ISO 2409 mit einem Einschneidengerät in einem Schnittabstand von 1 mm. Die Haftung wurde auf einer Skala von Gt 0 für keine Enthaftung bis Gt 5 für vollständige Enthaftung bewertet, wobei Gt 1, Gt 2, Gt 3 und Gt 4 entsprechende Abstufungen bezeichnen. Der in Tabelle 3 jeweils zuerst angegebene Wert bezieht sich auf die Prüfung direkt nach dem Salzsprühtest im nassen Zustand und der jeweils zweite Wert auf die Prüfung nach 24 Stunden im trockene Zustand.

Die Ergebnisse sind in Tabelle 3 zusammengestellt.

**Tabelle 3: Salzsprühtest**

| | | KS 2b | KS 2a | KS V2 | KSV1 | KS V |
|---|---|---|---|---|---|---|
| Ritz | Unterwanderung [mm] | 0 | 0 | nicht zu erkennen | nicht zu erkennen | nicht zu erkennen |
| | Blasen [mm] | 1,5-25 | 12-23 | 15-25 | 2-25 | 15-26 |
| | Blasen | M 5 | M 5 | M 5 | M 5 | M 5 |
| | [Menge / Größe] | S 4-5 | S 4-5 | S 4-5 | S 4-5 | S 3 |
| | Enthaftung [mm] | 8-18 | 13-18 | 10-25 | 6,5-25 | 16-23 |
| | Unterrostung [mm] | 8-18 | 13-18 | 10-25 | 2-25 | 16-23 |
| Fläche | Blasen | M 5 | M 5 | M 5 | M 5 | SM 5 |
| | [Menge / Größe] | S 4- | S 4- | S 4- | S 3-4 | S 3 |
| | Gitterschnitt | Gt 0-1/ 1-2 | Gt 0-1/ 1-2 | Gt 0-2/ 1-2 | Gt 0-3/ 1-2 | Gt 5/ 5 |

Die auf den erfindungsgemäßen Bindemitteln basierenden Korrosionsschutzlacke KS 2a und KS 2b zeigen im Salzsprühtest geringere Blasenbildung sowie verminderte Enthaftung und Unterrostung.

### B Bodenbelagsklebstoffe

### Einsatzstoffe:

- Entschäumer I: Agitan® 282 (Münzing Chemie GmbH): Kombination von flüssigen Kohlenwasserstoffen, hydrophober Kieselsäure, synthetischen Copolymeren und nichtionogenen Emulgatoren;
- Entschäumer II: Lumiten® N-OG (BASF SE): Lösung nichtionischer Fettalkoholethoxylate;
- Na-Gluconat: Abbindeverzögerer (Merck-Schuchardt)
- Dispergierhilfsmittel I: Pigmentverteiler NL (BASF SE): 35 gew.-% ige wässrige Lösung eines Natriumpolyacrylats;
- Füllstoff I: Ulmer Weiss XM (Eduard Merkle GmbH & Co.): Calciumcarbonat;
- Verdicker I: Latekoll D® (BASF SE): Anionische Dispersion von Acrytsäure-Acrylsäureester-Copolymeren;
- Harzschmelze: Mischung bestehend aus: 55 Gewichtsteilen nichtkristallisierender, polymerisierter Kolophoniumharz (Dercol® M 10 B, DIAMANTINO MALHO & C^{a}), 35 Gewichtsteilen Harzester (Bremasin 1205, Robert Kraemer GmbH & Co. KG) und 10 Gewichtsteilen Polypropylenglykol (Pluriol® P 600 BASF SE);
- Emulgator I: Emulphor® FAS 30 (BASF SE): 30 gew.-%ige Lösung von Fettalkoholethersulfat-Natriumsalzen;
- Netzmittel I: Emulan® HE 50 (BASF SE): Alkoholethoxylate.

### Beispiel 3: Bodenbelagsklebstoffe

### Herstellung der Klebstoffformulierungen:

Die erfindungsgemäßen Klebstoffformulierungen I und II wurden gemäß der im Folgenden angegebenen Rezepturen I bzw. II durch Mischen von Polymerdispersionen, Füllstoffen, gegebenenfalls Tackifiern und weiteren Additiven hergestellt. Entsprechende Vergleichsformulierungen I-V und II-V, die kein Borax enthalten aber ansonsten mit den Formulierungen I und II identisch sind, wurden ebenfalls hergestellt.

### Rezeptur I:

| | Gew.-Teile |
|---|---|
| Dispersion A (s. u.) | 53,0 |
| Borax | 0,53 |
| Entschäumer I | 0,1 |
| Entschäumer II | 0,1 |
| Na-Gluconat | 0,5 |
| Dispergierhilfsmittel I | 0,5 |
| Füllstoff I | 45,0 |
| Verdicker I | 0,8 |

- Dispersion A:: Herkömmliche Polymerdispersion hergestellt durch Emulsionspolymerisation von 71,9 Gew.-%, bezogen auf die Gesamtmenge an Monomeren, n-Butylacrylat, 25 Gew.-% Ethylhexylacrylat, 3 Gew.-% Metharcylsäure und 0,1 Gew.-% Acrylamid. Glasübergangstemperatur: -44 °C, pH: 7 bis 7,5, Feststoffgehalt: 69%.

### Rezeptur II:

| | Gew.-Teile |
|---|---|
| Dispersion B (s. u.) | 35,5 |
| Borax | 0,36 |
| Verdickter I,4 gew.-%ige Lösung | 10,0 |
| Harzschmelze | 15,0 |
| Emulgator I | 1,0 |
| Entschäumer I | 0,2 |
| Dispergierhilfsmittel I | 1,0 |
| Netzmittel I | 0,2 |
| Füllstoff I | 37,1 |

- Dispersion B:: Herkömmliche Polymerdispersion hergestellt durch Emulsionspolymerisation von 87,5 Gew.-%, bezogen auf die Gesamtmenge an Monomeren, n-Butylacrylat, 10 Gew.-% Acrylnitril und 2,5 Gew.-% Arcylsäure. Glasübergangstemperatur: -22 °C, Feststoffgehalt: 62%; die Dispersion wurde mit wässrigem Ammoniak auf pH 7,5 eingestellt.

### Anwendungstechnische Prüfungen

### 1. Nassanzugsvermögen (NAV)

Die Substrate Faserzement-Platte (500 x 200 mm) und Nadelvliesbelag (200 x 50 mm NBB-Streifen) wurden ebenso wie der Klebstoff mindestens 24 Stunden bei Normalklima (23 °C, 50 %ige relative Luftfeuchtigkeit) konditioniert. Man trug den Klebstoff mit einem genormten Schälrakel (Zahnleiste TKB B 1) in Abzugsrichtung auf die Faserzement-Platte auf, legte die Nadelvliesbeläge (NBB-Streifen) nach 15 Minuten Ablüften mit der Rückseite in das Klebstoffbett ein und presste mit einer 2,5 kg Walze durch 3-maliges Hin- und Herrollen an. In den angegebenen Zeitabständen schälte man die Beläge dann mit einem Abzugsgerät ab und bestimmte dabei die Zunahme des Abschälwiderstandes in N/5 cm. Die Prüfgeschwindigkeit betrug 725 mm/Minute. Zur Auswertung wurde der Mittelwert aus 2 Prüfkörpern in N/5 cm gebildet und das Bruchbild visuell beurteilt. Die Ergebnisse sind in Tabelle 4 aufgelistet.

**Tabelle 4: Nassanzugsvermögen; Zahlenwerte geben den Abschälwiderstand in N/5 cm an.**

| Zeitspannen nach Anpressen | Klebstoff I | Klebstoff I-V | Klebstoff II | Klebstoff II-V |
|---|---|---|---|---|
| 10 min | 4 | 3 | 2 | 2 |
| | Kohäsionsbruch | Kohäsionsbruch | Kohäsionsbruch | Kohäsionsbruch |
| 15 min | 6 | 9 | 4 | 4 |
| | Kohäsionsbruch | Kohäsionsbruch | Kohäsionsbruch | Kohäsionsbruch |
| 20 min | 12 | 14 | 10 | 8 |
| | Kohäsionsbruch | Kohäsionsbruch | Kohäsionsbruch | Kohäsionsbruch |
| 30 min | 23 | 26 | 17 | 22 |
| | Kohäsionsbruch | Kohäsionsbruch | Kohäsionsbruch | Kohäsionsbruch |

Das Abbindeverhalten der beiden Klebstoffformulierungen I und II verändert sich durch die Zugabe von Borax nur unwesentlich, verschlechtert sich aber geringfügig für längere Abbindezeiten.

### 2. Trockenanfassvermögen (TAV)

Die Substrate Faserzement-Platte (500 x 200 mm) und Pegulan B 1 Testbelag (200 x 50 mm) wurden ebenso wie der Klebstoff mindestens 24 Stunden bei Normalklima (23 °C, 50 %ige relative Luftfeuchtigkeit) konditioniert. Man trug den Klebstoff mit einer genormten Scherrakel (Zahnleiste TKB A 2) in Abzugsrichtung auf die Faserzement-Platte auf, legte nach 20 bis 40 minütigem Ablüften den PVC-Streifen mit der Rückseite in das Klebstoffbett ein und presste mit einer 2,5 kg Walze durch 3-maliges Hin- und Herrollen an. Die Prüfung erfolgte sofort nach dem Verkleben durch Abschälen mit dem Abzugsgerät, und man bestimmte den Abschälwiderstand in N/5 cm. Die Prüfgeschwindigkeit betrug 725 mm/Minute. Zur Auswertung wurde der Mittelwert aus 2 Prüfkörpern in N/mm gebildet und das Bruchbild visuell beurteilt. Die Ergebnisse sind in Tabelle 5 aufgelistet.

**Tabelle 5: Trockenanzugsvermögen; Zahlenwerte geben den Abschälwiderstand in N/5 cm an.**

| Ablüftzeiten | Klebstoff I | Klebstoff I-V | Klebstoff II | Klebstoff II-V |
|---|---|---|---|---|
| 20 min | 2 | 2 | 0 | 1 |
| | Kohäsionsbruch | Kohäsionsbruch | Kohäsionsbruch | Kohäsionsbruch |
| 25 min | 9 | 6 | 6 | 8 |
| | Kohäsionsbruch | Kohäsionsbruch | Kohäsionsbruch | Kohäsionsbruch |
| 30 min | 10 | 10 | 14 | 11 |
| | Adhäsionsbruch | Kohäsionsbruch mit ca. 30% der Fläche Adhäsionsbruch | Kohäsionsbruch mit ca. 30% der Fläche Adhäsionsbruch | Kohäsionsbruch mit ca. 30% der Fläche Adhäsionsbruch |
| 40 min | 5 | 4 | 10 | 7 |
| | Adhäsionsbruch | Adhäsionsbruch | Adhäsionsbruch | Adhäsionsbruch |

Die "offene Zeit", also der Zeitraum innerhalb der die Verklebung ausgeführt werden muss, ist für Klebstoff II etwas länger als für den Vergleichsklebstoff II-V ohne Borat. Im Falle des Klebstoffs I hatte der Zusatz von Borat dagegen praktisch keine Auswirkungen auf die offene Zeit.

### 3. Dynamische Schälfestigkeit, nach EN 1372

Abweichend von der EN 1372 entfettete man die Substrate zunächst mit Isopropanol. Die Substrate Faserzement-Platte (150 x 50 mm) und elastischer Bodenbelag (200 x 50 mm) wurden ebenso wie der Klebstoff mindestens 24 Stunden bei Normalklima (23 °C, 50 %ige relative Luftfeuchtigkeit) konditioniert. Den Klebstoff trug man mit einem genormten Auftragegerät (Zahnleiste TKB B1 für textile Beläge und Linoleum sowie Zahnleiste TKB A2 für PVC und Polyolefin) in Längsrichtung auf die Faserzement-Platte mit einem Anstellwinkel von 70° auf. Der Belag wurde mit der Rückseite so auf die Faserzement-Platte geklebt, dass 3 Seiten bündig sind und der Belag an einer Seite übersteht. Nach 10 und 30 Minuten Ablüften presste man den Testbelag mit einer 3,5 kg Anpresswalze durch einmaliges Hin- und Herrollen über die Länge des Prüfkörpers ohne Ausübung eines zusätzlichen Druckes an. Man lagerte die Prüfkörper 2 bzw. 14 Tage bei Normklima und führte danach die Schälung im Winkel von 90° mit einer Prüfgeschwindigkeit von 100 mm/Minute durch. Zur Auswertung wurde der Mittelwert aus 5 Prüfkörpern in N/mm gebildet und das Bruchbild visuell beurteilt. Die Ergebnisse sind in Tabelle 6 aufgelistet.

**Tabelle 6: Schälfestigkeit; mit Klebstoffen I und I-V wurde PVC und mit Klebstoffen II und II-V wurde Gummi (Belag "Norament" der Fa. Freudenberg) verklebt; Zahlenwerte geben den Abschälwiderstand in N/mm an.**

| Ablüftzeit, Lagerungszeit | | Klebstoff I | Klebstoff I-V | Klebstoff II | Klebstoff II-V |
|---|---|---|---|---|---|
| 10 min, 2 Tage | MW* | - | - | 2,70 | 2,14 |
| | S* | - | - | 0,26 | 0,29 |
| | BB* | - | - | Kohäsionsbruch mit ca. 30% der Fläche Adhäsionsbruch | Kohäsionsbruch mit ca. 30% der Fläche Adhäsionsbruch |
| 10 min, 14 Tage | MW* | 1,81 | 1,48 | 1,84 | 1, 38 |
| | S* | 0,05 | 0,22 | 0,21 | 0,13 |
| | BB* | Adhäsionsbruch am PVC | Adhäsionsbruch am PVC | Adhäsionsbruch | Adhäsionsbruch |
| 30 min, 14 Tage | MW* | 1,23 | 0,72 | - | - |
| | S* | 0,24 | 0,13 | - | - |
| | BB* | Adhäsionsbruch am PVC | Adhäsionsbruch am PVC | - | - |

| | | | | | |
|---|---|---|---|---|---|
| * MW: Mittelwert aus 5 Messungen; S: Standardabweichung; BB: Bruchbild. | | | | | |

Die Resultate belegen, dass die Schälfestigkeit der erfindungsgemäßen Klebstoffe I und II gegenüber den Vergleichsklebstoffen I-V und II-V, die kein Borat enthalten, deutlich erhöht ist.
4. Lagerstabilität der Dispersionsklebstoffe: Prüfung der Viskosität nach Brookfield Der Klebstoff wurde zunächst 3 Stunden bei Normalklima (23 °C, 50 %ige relative Luftfeuchtigkeit) konditioniert. Man lagerte ausreichende Probenmengen des zu prüfenden Dispersionsklebstoffs in dicht verschlossenen Glasflaschen bei Normalklima (NKL) bzw. bei 50 °C im Trockenschrank. Nach den angegebenen Zeitabständen wurde jeweils die Viskosität mit einem Brookfield Viskosimeter (Modell RVT, mit Prüfkörper "Spindel 6", Einstellung: 20 Upm) gemessen. Als Vergleich führte man eine Viskositätsmessung vor der Probenlagerung durchgeführt. Die Ergebnisse sind in Tabelle 7 aufgelistet.

**Tabelle 7: Lagerstabilität; Viskositäten in mPa·s.**

| Lagerung | | Klebstoff I | Klebstoff I-V | Klebstoff II | Klebstoff II-V |
|---|---|---|---|---|---|
| Vergleich | | 29400 | 29600 | 36800 | 29900 |
| NKL | 1 Tag | 34400 | 35000 | 35800 | 28300 |
| | 4 Tage | 32800 | 30800 | 28400 | 22500 |
| | 7 Tage | 33200 | 35100 | 29800 | 25450 |
| | 14 Tage | 35000 | 38000 | 28000 | 22100 |
| | 28 Tage | 36100 | 33500 | 27000 | 21800 |
| 50°C | 4 Tage | 28900 | 32600 | 19000 | 19650 |
| | 7 Tage | 34000 | 34650 | 21550 | 19700 |
| | 14 Tage | 37700 | 36400 | 20400 | 18650 |
| | 28 Tage | 36100 | 35700 | 19800 | 18900 |

Trotz Zusatz von Borax als Vernetzer steigt die Viskosität der beiden erfindungsgemäßen Klebstoffe I und II im Vergleich zu den Vergleichsformulierungen ohne Borax nur geringfügig an. Diese ausgezeichnete Lagerstabilität ermöglicht den Einsatz von Klebstoffen der Erfindung in 1-Komponentenformulierungen. Dies ist ein großer Vorteil gegenüber gebräuchlichen Klebstoffen mit Vernetztern des Standes der Technik verwenden, insbesondere solchen, die kovalente Bindungen ausbilden.

### 5. Filmmechanik und Filmdehnung

Zur Bildung eines Beschichtungsfilms wurde die zu untersuchende Dispersion durch ein Messingsieb (Maschenweite 0,16 mm) blasenfrei in eine Filmplatte (aus Silikonkautschuk, Innenmaße 145 mm x 145 mm x 5 mm) gegossen und gleichmäßig verteilt. Je nach Viskosität verdünnte man die Dispersion gegebenenfalls zuvor mit etwas Wasser. Die Dispersionseinwaage wählte man so, dass ein etwa 1 mm dicker Film entstand (beispielsweise eine Einwaage von etwa 46 g im Falle einer Dispersion mit einem Feststoffgehalt von 50 %). Die so vorbereitete Platte trocknete man dann über mehr als 4 Tage bei Normklima in einem Plattenlagergestell. Der trockene wurde dann aus der Platte genommen und man stanzte 5 Prüfhanteln mit einer Prüflänge von 40 mm und einer Prüfbreite von 4 mm aus (gemäß DIN 53 455). Die Dicke des Prüfkörpers wurde mit einem Mikrometer gemessen. Dann dehnte man den Prüfkörper mit einer Zugprüfmaschine mit einer Geschwindigkeit von 200 mm/min bis zum Bruch. Zur Auswertung wurden die Maximalspannung (Fₘₐₓ) in N/mm², die Dehnung bei Maximalspannung (S_{Fmax}) in %, die Bruchspannung (F_{Smax}) in N/mm², die Bruchdehnung (Sₘₐₓ) in % und die Spannungen bei 300%, 500%, 700%, 1200% sowie 2400% Dehnung (F_{x%s}) in N/mm² bestimmt. Die Ergebnisse sind in Tabelle 8 aufgelistet. Angegeben sind die Mittelwerte aus drei separaten Bestimmungen.

**Tabelle 8: Filmmechanische Eigenschaften**

| | Dispersion A, pH=9,5 mit 1 % Borax (fest/fest) | Dispersion A | Dispersion B, pH=9,5 mit 1 % Borax (fest/fest) | Dispersion B |
|---|---|---|---|---|
| Fₘₐₓ [N/mm²] | 0.08 | 0.11 | 0.16 | 0.18 |
| S_{Fmax} [%] | 1478 | 721 | 1858 | 1947 |
| F_{Smax} [N/mm²] | 0.01 | 0.05 | 0.08 | 0.14 |
| Sₘₐₓ [%] | 1809 | 1288 | >3000 | >3000 |
| F_{300%S} [N/mm²] | 0.04 | 0.08 | 0.10 | 0.11 |
| F_{500%S} [N/mm²] | 0.05 | 0.10 | 0.11 | 0.13 |
| F_{700%S} [N/mm²] | 0.06 | 0.11 | 0.13 | 0.14 |
| F_{1200%S} [N/mm²] | 0.08 | 0.07 | 0.15 | 0.17 |
| F_{2400%S} [N/mm²] | -- | -- | 0.16 | 0.18 |

Im Falle der Dispersion B blieben die filmmechanischen Eigenschaften gegenüber dem Borax-freien Vergleich fast unverändert. Dem gegenüber bewirkte der Zusatz von Borax zur Dispersion A in etwa eine Verdopplung der Dehnung bei Maximalspannung als auch eine Erhöhung der Bruchdehnung, was auf deutlich erhöhte Flexibilität und verringerte Bruchneigung hindeutet. Dies lässt sich vermutlich auf den Anteil Acrylamid in dieser Dispersion zurückführen.

## Patentansprüche

1. Wässrige Bindemittelzusammensetzung, enthaltend
a) ein wasserunlösliches Polymer in Form dispergierter Polymerpartikel mit einer Glasübergangstemperatur im Bereich von -50°C bis 50°C erhältlich durch radikalische Polymerisation ethylenisch ungesättigter Monomere M, wobei die Monomere M umfassen:
• 80 bis 99,9 Gew.-%, bezogen auf die Gesamtmenge an Monomeren M, wenigstens eines gering wasserlöslichen neutralen monoethylenisch ungesättigten Monomers M1; und
• 0,1 bis 20 Gew.-%, bezogen auf die Gesamtmenge an Monomeren M, wenigstens eines monoethylenisch ungesättigten Monomers M2, das wenigstens eine Carboxylgruppe und/oder wenigstens eine Carbonsäureamidgruppe (CONH₂) trägt;
und
b) Borsäure und/oder wenigstens ein Salz der Borsäure.

2. Wässrige Bindemittelzusammensetzung nach Anspruch 1, wobei das wenigstens eine Monomer M1 ausgewählt ist unter Estern und Diestern α,β-ethylenisch ungesättigter Mono- und Dicarbonsäuren mit C₁-C₃₀-Alkanolen, Estern von Vinyl - oder Allylalkohol mit C₁-C₃₀-Mono-carbonsäuren, Vinylaromaten, Amiden und Diamiden α,β-ethylenisch ungesättigter Mono- und Dicarbonsäuren mit C₁-C₃₀-Alkylaminen oder Di-C₁-C₃₀-alkylaminen und Mischungen davon.

3. Wässrige Bindemittelzusammensetzung nach einem der vorhergehenden Ansprüche, wobei die Monomeren M2 wenigstens ein Monomer mit wenigstens einer Carboxylgruppe umfassen, das ausgewählt ist unter monoethylenisch ungesättigten C₃-C₈-Monocarbonsäuren und monoethylenisch ungesättigten C₃-C₈-Dicarbonsäuren.

4. Wässrige Bindemittelzusammensetzung nach einem der vorhergehenden Ansprüche, wobei die Monomeren M2 wenigstens ein Monomer mit wenigstens einer Carbonsäureamidgruppe umfassen, das ausgewählt ist unter den primären Amiden monoethylenisch ungesättigten C₃-C₈-Monocarbonsäuren..

5. Wässrige Bindemittelzusammensetzung nach einem der vorhergehenden Ansprüche, wobei die Monomere M zusätzlich wenigstens ein Monomer M3 umfassen, das ausgewählt ist unter Hydroxy-C₂-C₄-alkylestem monoethylenisch ungesättigter Monocarbonsäuren, Monoester monoethylenisch ungesättigter Carbonsäuren mit Polyoxy-C₂-C₄-alkylenethern sowie monoethylenisch ungesättigte Monomere mit wenigstens einer Hamstoffgruppe.

6. Wässrige Bindemittelzusammensetzung nach einem der vorhergehenden Ansprüche, wobei die Komponente b) ausgewählt ist unter Borsäure und Alkali-, Erdalkali-, Ammonium-, Alkylammonium- und Hydroxyalkylammoniumsalzen der Borsäure oder Oligoborsäure mit bis zu 20 Boratomen.

7. Wässrige Bindemittelzusammensetzung nach einem der vorhergehenden Ansprüche, enthaltend die Komponente b) in einer Menge von 0,1 bis 10 Gew.-%, bezogen auf das wasserunlösliche Polymer.

8. Feste Bindemittelzusammensetzung enthaltend ein wasserunlösliches Polymer gemäß der Ansprüche 1 bis 7 in Form eines Pulvers und Borsäure und/oder wenigstens ein Salz der Borsäure.

9. Verfahren zur Herstellung einer wässrigen Bindemittelzusammensetzung nach einem der Ansprüche 1 bis 7, umfassend die Schritte
A) Herstellung einer wässrigen Dispersionen eines wasserunlöslichen Polymers mit einer Glasübergangstemperatur im Bereich von -50°C bis 50°C durch radikalische Polymerisation ethylenisch ungesättigter Monomere M; und
B) Zugabe von Borsäure und/oder wenigstens eines Salzes der Borsäure zu der in Schritt A) erhaltenen Polymerdispersion oder während deren Herstellung.

10. Verwendung von Borsäure und/oder wenigstens eines Salzes der Borsäure zur Modifizierung der Eigenschaften eines Klebstoffs, der ein wasserunlösliches Polymer enthält, das durch radikalische Polymerisation ethylenisch ungesättigter Monomere M erhältlich ist, wobei die Monomere M umfassen:
- 80 bis 99,9 Gew.-%, bezogen auf die Gesamtmenge an Monomeren M, wenigstens eines gering wasserlöslichen neutralen monoethylenisch ungesättigten Monomers M1; und
- 0,1 bis 20 Gew.-%, bezogen auf die Gesamtmenge an Monomeren M, wenigstens eines monoethylenisch ungesättigten Monomers M2, das wenigstens eine Carboxylgruppe und/oder wenigstens eine Carbonsäureamidgruppe (CONH₂) trägt.

11. Verwendung nach Anspruch 10 zur Modifizierung der Adhäsions- oder Kohäsionseigenschaften des Klebstoffs.

12. Verwendung von Borsäure und/oder wenigstens eines Salzes der Borsäure zur Modifizierung der Eigenschaften einer polymergebundenen Beschichtung, die als Bindemittel ein wasserunlösliches Polymer enthält, das durch radikalische Polymerisation ethylenisch ungesättigter Monomere M erhältlich ist, wobei die Monomere M umfassen:
- 80 bis 99,9 Gew.-%, bezogen auf die Gesamtmenge an Monomeren M, wenigstens eines gering wasserlöslichen neutralen monoethylenisch ungesättigten Monomers M1; und
- 0,1 bis 20 Gew.-%, bezogen auf die Gesamtmenge an Monomeren M, wenigstens eines monoethylenisch ungesättigten Monomers M2, das wenigstens eine Carboxylgruppe und/oder wenigstens eine Carbonsäureamidgruppe (CONH₂) trägt.

13. Verwendung nach Anspruch 12 zur Modifizierung der Haftung, Abriebfestigkeit, Härte, und/oder Blockfestigkeit des Beschichtungsfilmes.

14. Verwendung einer Bindemittelzusammensetzung nach einem der Ansprüche 1 bis 8 in Anstrichmitteln.

15. Verwendung einer Bindemittelzusammensetzung nach einem der Ansprüche 1 bis 8 in Klebstoffen.

16. Verwendung einer Bindemittelzusammensetzung nach einem der Ansprüche 1 bis 8 in Zementen.

## Claims

1. An aqueous binder composition comprising
a) a water-insoluble polymer in the form of dispersed polymer particles having a glass transition temperature in the range from -50°C to 50°C, obtainable by free-radical polymerization of ethylenically unsaturated monomers M, the monomers M comprising:
• 80% to 99.9% by weight, based on the total amount of monomers M, of at least one neutral, monoethylenically unsaturated monomer M1 of low water-solubility; and
• 0.1 % to 20% by weight, based on the total amount of monomers M, of at least one monoethylenically unsaturated monomer M2 which carries at least one carboxyl group and/or at least one carboxamido group (CONH₂);
and
b) boric acid and/or at least one salt of boric acid.

2. The aqueous binder composition according to claim 1, the at least one monomer M1 being selected from esters and diesters of α,β-ethylenically unsaturated monocarboxylic and dicarboxylic acids with C₁-C₃₀ alkanols, esters of vinyl alcohol or allyl alcohol with C₁-C₃₀ monocarboxylic acids, vinylaromatics, amides and diamides of α,β-ethylenically unsaturated monocarboxylic and dicarboxylic acids with C₁-C₃₀ alkylamines or di-C₁-C₃₀ alkylamines, and mixtures thereof.

3. The aqueous binder composition according to any of the preceding claims, the monomers M2 comprising at least one monomer having at least one carboxyl group, which monomer is selected from monoethylenically unsaturated C₃-C₈ monocarboxylic acids and monoethylenically unsaturated C₃-C₈ dicarboxylic acids.

4. The aqueous binder composition according to any of the preceding claims, the monomers M2 comprising at least one monomer having at least one carboxamido group, which monomer is selected from the primary amides of monoethylenically unsaturated C₃-C₈ monocarboxylic acids.

5. The aqueous binder composition according to any of the preceding claims, the monomers M further comprising at least one monomer M3 which is selected from hydroxy-C₂-C₄ alkyl esters of monoethylenically unsaturated monocarboxylic acids, monoesters of monoethylenically unsaturated carboxylic acids with polyoxy-C₂-C₄ alkylene ethers, and monoethylenically unsaturated monomers having at least one urea group.

6. The aqueous binder composition according to any of the preceding claims, component b) being selected from boric acid and alkali metal salts, alkaline earth metal salts, ammonium salts, alkylammonium salts, and hydroxyalkylammonium salts of boric acid or oligoboric acid having up to 20 boron atoms.

7. The aqueous binder composition according to any of the preceding claims, comprising component b) in an amount of 0.1 % to 10% by weight, based on the water-insoluble polymer.

8. A solid binder composition comprising a water-insoluble polymer according to claims 1 to 7 in the form of a powder, and boric acid and/or at least one salt of boric acid.

9. A process for preparing an aqueous binder composition according to any of claims 1 to 7, comprising the steps of
A) preparing an aqueous dispersion of a water-insoluble polymer having a glass transition temperature in the range from -50°C to 50°C by free-radical polymerization of ethylenically unsaturated monomers M; and
B) adding boric acid and/or at least one salt of boric acid to the polymer dispersion obtained in step A), or during its preparation.

10. The use of boric acid and/or at least one salt of boric acid to modify the properties of an adhesive comprising a water-insoluble polymer obtainable by free-radical polymerization of ethylenically unsaturated monomers M, the monomers M comprising:
- 80% to 99.9% by weight, based on the total amount of monomers M, of at least one neutral, monoethylenically unsaturated monomer M1 of low water-solubility; and
- 0.1% to 20% by weight, based on the total amount of monomers M, of at least one monoethylenically unsaturated monomer M2 which carries at least one carboxyl group and/or at least one carboxamido group (CONH₂).

11. The use according to claim 10 to modify the adhesion or cohesion properties of the adhesive.

12. The use of boric acid and/or at least one salt of boric acid to modify the properties of a polymer-bound coating comprising as binder a water-insoluble polymer obtainable by free-radical polymerization of ethylenically unsaturated monomers M, the monomers M comprising:
- 80% to 99.9% by weight, based on the total amount of monomers M, of at least one neutral, monoethylenically unsaturated monomer M1 of low water-solubility; and
- 0.1% to 20% by weight, based on the total amount of monomers M, of at least one monoethylenically unsaturated monomer M2 which carries at least one carboxyl group and/or at least one carboxamido group (CONH₂).

13. The use according to claim 12 to modify the adhesion, abrasion resistance, hardness and/or blocking resistance of the coating film.

14. The use of a binder composition according to any of claims 1 to 8 in a surface coating material.

15. The use of a binder composition according to any of claims 1 to 8 in an adhesive.

16. The use of a binder composition according to any of claims 1 to 8 in a cement.

## Revendications

1. Composition aqueuse de liant, contenant :
a) un polymère insoluble dans l'eau sous la forme de particules polymères dispersées ayant une température de transition vitreuse dans la plage allant de -50 °C à 50 °C pouvant être obtenu par polymérisation radicalaire de monomères éthyléniquement insaturés M, les monomères M comprenant :
- 80 à 99,9 % en poids, par rapport à la quantité totale de monomères M, d'au moins un monomère M1 monoéthyléniquement insaturé neutre faiblement soluble dans l'eau ; et
- 0,1 à 20 % en poids, par rapport à la quantité totale de monomères M, d'au moins un monomère M2 monoéthyléniquement insaturé, qui porte au moins un groupe carboxyle et/ou au moins un groupe amide d'acide carboxylique (CONH₂) ;
et
b) de l'acide borique et/ou au moins un sel de l'acide borique.

2. Composition aqueuse de liant selon la revendication 1, dans laquelle le ou les monomères M1 sont choisis parmi les esters et diesters d'acides mono- et dicarboxyliques α,β-éthyléniquement insaturés avec des alcanols en C₁-C₃₀, les esters d'alcool vinylique ou allylique avec des acides monocarboxyliques en C₁-C₃₀, les composés aromatiques de vinyle, les amides et les diamides, les acides mono- et dicarboxyliques α,β-éthyléniquement insaturés avec des alkylamines en C₁-C₃₀ ou des dialkylamines en C₁-C₃₀ et leurs mélanges.

3. Composition aqueuse de liant selon l'une quelconque des revendications précédentes, dans laquelle les monomères M2 comprennent au moins un monomère contenant au moins un groupe carboxyle choisi parmi les acides monocarboxyliques en C₃-C₈ monoéthyléniquement insaturés et les acides dicarboxyliques en C₃-C₈ monoéthyléniquement insaturés.

4. Composition aqueuse de liant selon l'une quelconque des revendications précédentes, dans laquelle les monomères M2 comprennent au moins un monomère contenant au moins un groupe amide d'acide carboxylique choisi parmi les amides primaires d'acides monocarboxyliques en C₃-C₈ monoéthyléniquement insaturés.

5. Composition aqueuse de liant selon l'une quelconque des revendications précédentes, dans laquelle les monomères M comprennent également au moins un monomère M3 choisi parmi les esters hydroxyalkyliques en C₂-C₄ d'acides monocarboxyliques monoéthyléniquement insaturés, les monoesters d'acides carboxyliques monoéthyléniquement insaturés avec des éthers de polyoxyalkylène en C₂-C₄, ainsi que les monomères monoéthyléniquement insaturés contenant au moins un groupe urée.

6. Composition aqueuse de liant selon l'une quelconque des revendications précédentes, dans laquelle le composant b) est choisi parmi l'acide borique et les sels alcalins, alcalino-terreux, d'ammonium, d'alkylammonium et d'hydroxyalkylammonium de l'acide borique ou de l'acide oligoborique contenant jusqu'à 20 atomes de bore.

7. Composition aqueuse de liant selon l'une quelconque des revendications précédentes, contenant le composant b) en une quantité de 0,1 à 10 % en poids, par rapport au polymère insoluble dans l'eau.

8. Composition de liant solide contenant un polymère insoluble dans l'eau selon les revendications 1 à 7 sous la forme d'une poudre et de l'acide borique et/ou au moins un sel de l'acide borique.

9. Procédé de fabrication d'une composition aqueuse de liant selon l'une quelconque des revendications 1 à 7, comprenant les étapes suivantes :
A) la fabrication d'une dispersion aqueuse d'un polymère insoluble dans l'eau ayant une température de transition vitreuse dans la plage allant de -50 °C à 50 °C par polymérisation radicalaire de monomères éthyléniquement insaturés M ; et
B) l'ajout d'acide borique et/ou d'au moins un sel de l'acide borique à la dispersion de polymère obtenue à l'étape A) ou pendant sa fabrication.

10. Utilisation d'acide borique et/ou d'au moins un sel de l'acide borique pour la modification des propriétés d'un adhésif, qui contient un polymère insoluble dans l'eau pouvant être obtenu par polymérisation radicalaire de monomères éthyléniquement insaturés M, les monomères M comprenant :
- 80 à 99,9 % en poids, par rapport à la quantité totale de monomères M, d'au moins un monomère M1 monoéthyléniquement insaturé neutre faiblement soluble dans l'eau ; et
- 0,1 à 20 % en poids, par rapport à la quantité totale de monomères M, d'au moins un monomère M2 monoéthyléniquement insaturé, qui porte au moins un groupe carboxyle et/ou au moins un groupe amide d'acide carboxylique (CONH₂).

11. Utilisation selon la revendication 10 pour la modification des propriétés d'adhésion ou de cohésion de l'adhésif.

12. Utilisation d'acide borique et/ou d'au moins un sel de l'acide borique pour la modification des propriétés d'un revêtement lié par un polymère, qui contient en tant que liant un polymère insoluble dans l'eau pouvant être obtenu par polymérisation radicalaire de monomères éthyléniquement insaturés M, les monomères M comprenant :
- 80 à 99,9 % en poids, par rapport à la quantité totale de monomères M, d'au moins un monomère M1 monoéthyléniquement insaturé neutre faiblement soluble dans l'eau ; et
- 0,1 à 20 % en poids, par rapport à la quantité totale de monomères M, d'au moins un monomère M2 monoéthyléniquement insaturé, qui porte au moins un groupe carboxyle et/ou au moins un groupe amide d'acide carboxylique (CONH₂).

13. Utilisation selon la revendication 12 pour la modification de l'adhérence, de la résistance à l'abrasion, de la dureté et/ou de la résistance à l'adhérence du film de revêtement.

14. Utilisation d'une composition de liant selon l'une quelconque des revendications 1 à 8 dans des peintures.

15. Utilisation d'une composition de liant selon l'une quelconque des revendications 1 à 8 dans des adhésifs.

16. Utilisation d'une composition de liant selon l'une quelconque des revendications 1 à 8 dans des ciments.
